# EUROPEAN PATENT SPECIFICATION

(11) **EP 3 491 264 B1**
(45) Date of publication and mention of the grant of the patent: **15.04.2020**
(21) Application number: 17751139.1
(22) Date of filing: 28.07.2017
(51) Int. Cl.: F16D 65/12

(54) **BRAKE DISC**
BREMSSCHEIBE
DISQUE DE FREIN

(30) Priority: 28.07.2016 IT 201600079656; 17.01.2017 IT 201700004700
(43) Date of publication of application: 05.06.2019
(73) Proprietor: GRIMECA S.r.l., 45010 Ceregnano (RO) (IT)
(72) Inventor: BETTO, Massimo, 35020 Pernumia (Padova) (IT); LISCIANI, Giuseppe, 45100 Rovigo (IT)
(74) Representative: Casadei, Barbara
(86) International application number: PCT/IB2017/054598
(87) International publication number: WO 2018/020467

(56) References cited:
- DE-A1-102012 221 351
- DE-A1-102013 219 650
- GB-A- 1 081 284
- US-A1- 2003 178 265
- US-A1- 2013 168 193

## Description

### Technical field

This invention relates to a brake disc.

More specifically, the brake disc according to this invention is preferably for use by bicycles or motorcycles with two or more wheels, without thereby limiting the scope of the invention.

### Background art

As is known from the prior art, the brake strip of a brake disc is subjected to a high level of heating during braking and is particularly sensitive to thermal expansion due to its thickness, which is to be considered reduced in relation to the considerable extension of its surface.

This heating may induce deformations of the brake strip both in the radial direction and in the axial direction of the disc, creating considerable problems in the mechanics of the braking.

To overcome these problems, which are especially evident in the systems of motorcycles with high-performance and for sports use, use is made of the so-called "floating" and "semi-floating" brake discs which usually consist of an internal support, an ebrake strip and an elastic system for attaching the support with the brake strip which allows a relative movement, or misalignment, of the brake strip with respect to the support in the radial direction or in the axial direction or in both directions.

The "floating" or "semi-floating" brake discs are however mechanical components with high production costs which are only justified for particular applications.

A known solution of brake disc is described and illustrated in document GB1081284.

### Disclosure of the invention

In this context, the need is felt for providing a monolithic brake disc comprising a brake strip, an element supporting the brake strip and at least one portion for connecting the supporting element with the brake strip.

A plurality of holes or slots, preferably through holes or slots define the connecting portions, or spokes, of the supporting element with the brake strip.

The brake strip, the supporting element and the connecting portion being a single mechanical part, as they derive from a machining of a single unfinished mechanical part.

The brake strip has two end faces the distance between which defines the axial thickness of the brake strip.

The supporting element has two end faces the distance between which defines the axial thickness of the supporting element.

The connecting portion has respective end faces the distance between which defines the axial thickness of the spoke.

The connecting portion has one or more recessed portions, in particular internal and/or superficial, realised at least according to a radial and axial direction of extension of the disc. Each recessed portion has a respective axial depth defined along the direction of axial extension of the disc and the average axial thickness of the connecting portion is defined as a value equal to the distance between the end faces of the connecting portion, or axial thickness, from which is subtracted the axial depth of at least one recessed portion, in particular internal or superficial.

Advantageously, the recessed portions made on the connecting portion of the supporting element with the brake strip give to each connecting portion a lower rigidity which determines a homogeneous distribution of the stress status caused by the twisting movement during braking since the connecting portion of the brake strip and of the internal support acts as compliant constraint, allowing a relative movement, or misalignment, of the brake strip with respect to the support in the radial direction or in the axial direction or in both directions.

### Brief description of drawings

The features of the brake dis according to the invention will become more apparent from the following detailed description of a preferred, non-limiting embodiment of it, illustrated by way of example in the accompanying drawings, in which:
- Figure 1 is a schematic perspective view of a first embodiment of a brake disc according to this invention;
- Figure 2 is a scaled-up view of a detail of the brake disc of Figure 1 with some parts cut away to better illustrate others;
- Figure 3 is a schematic perspective view of a second embodiment of the brake disc according to this invention;
- Figure 4 is a scaled-up view of a detail of the brake disc of Figure 3 with some parts cut away to better illustrate others;
- Figure 5 is a schematic perspective view of a variant of the second embodiment of the brake disc of Figure 3;
- Figure 6 is a scaled-up view of a detail of the brake disc of Figure 5 with some parts cut away to better illustrate others;
- Figure 7 is a schematic perspective view of a third embodiment of the brake disc according to this invention;
- Figure 8 is a scaled-up view of a detail of the brake disc of Figure 7 with some parts cut away to better illustrate others;
- Figure 9 is a schematic perspective view of a fourth embodiment of the brake disc according to this invention;
- Figure 10 is a scaled-up view of a detail of the brake disc of Figure 9 with some parts cut away to better illustrate others;
- Figure 11 is a schematic perspective view of a variant of the brake disc of Figure 9;
- Figure 12 is a scaled-up view of a detail of the brake disc of Figure 11 with some parts cut away to better illustrate others;
- Figure 13 is a schematic plan view of a variant of the brake disc of Figure 11;
- Figure 14 is a schematic perspective view of a fifth embodiment of the brake disc according to this invention;
- Figure 15 is a scaled-up view of a detail of the brake disc of Figure 14 with some parts cut away to better illustrate others;
- Figure 16 is a plan view of a first variant of the brake disc of Figure 14;
- Figure 17 is a plan view of a second variant of the brake disc of Figure 14;
- Figure 18 is a schematic front view of a sixth embodiment of the brake disc according to this invention;
- Figure 19 is a schematic perspective view of a detail of the brake disc of Figure 18 with some parts cut away to better illustrate others;
- Figure 20 is a schematic front view of a variant of the brake disc of Figures 18 and 19;
- Figure 21 is a schematic perspective view of a detail of the brake disc of Figure 20 with some parts cut away to better illustrate others;
- Figure 22 is a schematic front view of a seventh embodiment of the brake disc according to this invention;
- Figure 23 is a schematic perspective view of a detail of the brake disc of Figure 22 with some parts cut away to better illustrate others;
- Figure 24 is a schematic front view of a first variant of the brake disc of Figures 22 and 23;
- Figure 25 is a schematic perspective view of a detail of the brake disc of Figure 24 with some parts cut away to better illustrate others;
- Figure 26 is a schematic front view of a second variant of the brake disc of Figures 22 and 23;
- Figure 27 is a schematic perspective view of a detail of the brake disc of Figure 26 with some parts cut away to better illustrate others;
- Figure 28 is a schematic front view of an eighth embodiment of the brake disc according to this invention;
- Figure 29 is a schematic perspective view of a detail of the brake disc of Figure 28 with some parts cut away to better illustrate others;
- Figure 30 is a schematic front view of a ninth embodiment of the brake disc according to this invention;
- Figure 31 is a schematic perspective view of a detail of the brake disc of Figure 30 with some parts cut away to better illustrate others;
- Figure 32 is a schematic front view of a tenth embodiment of the brake disc according to this invention;
- Figure 33 is a schematic perspective view of a detail of the brake disc of Figure 32 with some parts cut away to better illustrate others;
- Figure 34 is a schematic front view of a first variant embodiment of the brake disc of Figure 32 and 33;
- Figure 35 is a schematic perspective view of a detail of the brake disc of Figure 34 with some parts cut away to better illustrate others;
- Figure 36 is a schematic front view of a second variant of the brake disc of Figures 32 and 33;
- Figure 37 is a schematic perspective view of a detail of the brake disc of Figure 36 with some parts cut away to better illustrate others;
- Figure 38 is a schematic perspective view of a variant of the detail of Figure 31;
- Figure 39 is a schematic front view of a detail of the brake disc of Figure 32 in operating conditions.

### Detailed description of preferred embodiments of the invention

With reference to the accompanying drawings, the numeral 1 denotes a monolithic brake disc according to the invention.

The brake disc 1 according to this invention is applicable preferably to vehicles such as bicycles or motorcycles, three and four-wheeled vehicles, ATV, go-karts, ultralight vehicles and vehicles of various types.

The brake disc 1 is an element rotating about its own main axis 1a of rotation.

With reference to the accompanying drawings, it should be noted that, by way of example, the numeral 1b, indicates one of the radial directions of extension of the brake disc 1 and the numeral 1c indicates one of the circumferential directions of extension 1c of the brake disc 1.

The brake disc 1 comprises a brake strip 2, a supporting element 3 of the brake strip 2 and at least one connecting portion 4 of the supporting element 3 with the brake strip 2.

According to this invention, the brake strip 2, the supporting element 3 and the connecting portion 4 are a single mechanical part, that is, they derive from the machining of a single unfinished mechanical part.

The brake strip 2 of the brake disc 1 is an annular strip having a thickness defined by the distance of the end faces 2a and 2b, preferably parallel, defining the zones of contact with friction means (not illustrated) for braking or the transmission of a torque by friction.

The end faces 2a and 2b of the brake strip 2 are preferably perpendicular to the axis of rotation 1a of brake disc 1.

The thickness of the brake strip 2 is determined along a direction of axial extension of the brake disc 1, in particular along a direction parallel to the main axis 1a of rotation.

With reference to a direction parallel to the main axis 1a of rotation, the brake strip 2 has a perimeter face 2c facing towards the outside of the disc 1 and a perimeter face 2d facing towards the inside of the disc 1, in particular towards the supporting element 3.

Each end face 2a and 2b of the brake strip 2 has an extension, in particular along a direction transversal to or at a right angle to the main axis 1a of rotation, delimited by the perimeter face 2c facing towards the outside of the disc 1 and the perimeter face 2d facing towards the inside of the disc 1.

The supporting element 3 is configured to be keyed, centrally, to the hub of a rotary element or to a wheel of the vehicle (bicycle or motorcycle or vehicle of other types not illustrated).

The supporting element 3 has two end faces 3a and 3b.

Preferably, the two end faces 3a and 3b are parallel to each other.

The end faces 3a and 3b of the supporting element 3 are preferably perpendicular to the axis of rotation 1a of brake disc 1.

The supporting element 3 has a thickness defined by the distance of the end faces 3a and 3b.

The thickness of the supporting element 3 is determined along a direction of axial extension of the brake disc 1, in particular along a direction parallel to the main axis 1a of rotation.

The connecting portion 4 has respective end faces 4a and 4b parallel to each other.

The end faces 4a and 4b are preferably perpendicular to the axis of rotation 1a of brake disc 1.

The connecting portion 4 has a thickness defined by the distance of the end faces 4a and 4b.

The thickness of the connecting portion 4 is determined along a direction of axial extension of the brake disc 1, in particular along a direction parallel to the main axis 1a of rotation.

Preferably, the end faces 4a and 4b of the connecting portion 4 are coplanar or parallel to the respective end faces 3a and 3b of the supporting element 3 and to the respective end faces 2a and 2b of the brake strip 2.

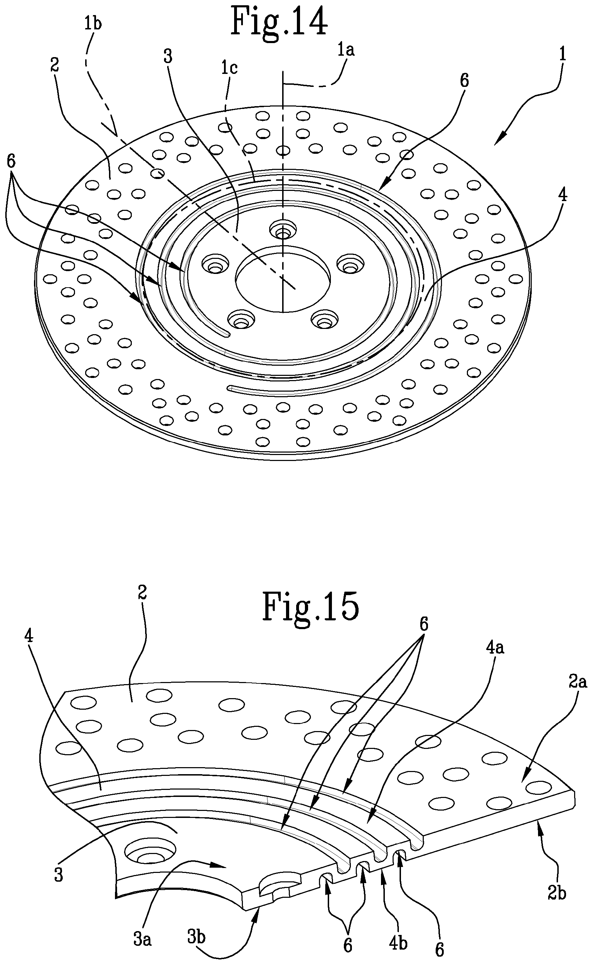

With reference to the embodiment of the brake disc 1 illustrated in Figure 14, the connecting portion 4 is a portion of the brake disc 1 which extends continuously, or without interruptions, in a radial 1b and circumferential 1c direction of the brake disc 1 from the supporting element 3 to the brake disc 2.

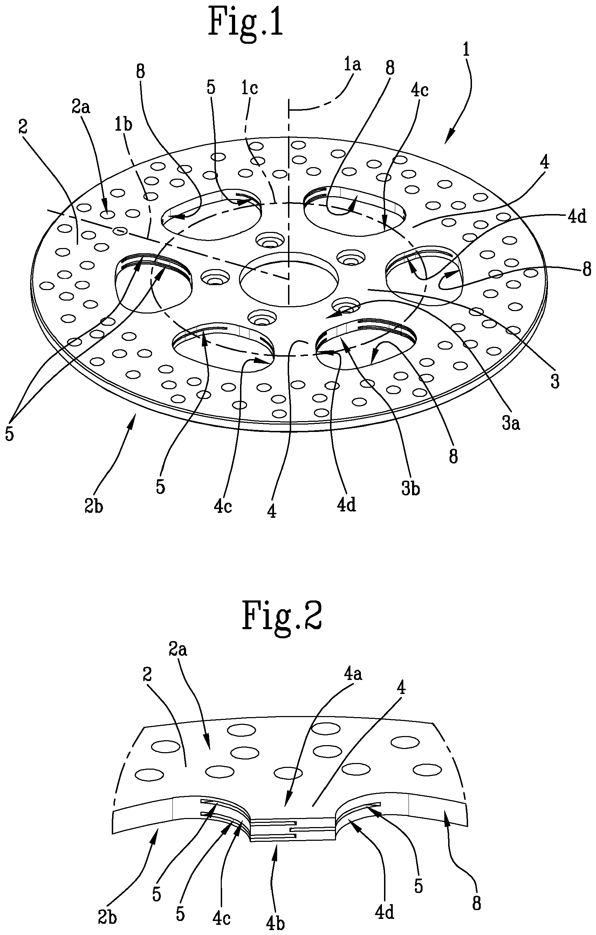

With reference to the embodiments of brake disc 1 of Figures 1, 3, 5, 7, 9, 11, 13, 16, 17, it has a plurality of connecting portions 4, referred to below as spokes 4, of the supporting element 3 with the brake strip 2.

The connecting portions or spokes 4 are defined by a plurality of holes or slots 8, preferably through holes or slots, positioned on the disc 1 between the supporting element 3 and the brake strip 2.

Each hole or slot 8 defines the perimeter faces 4c and 4d of respective spokes 4, in particular the faces perimeter 4c and 4d of two adjacent spokes 4.

Each hole or slot 8 defines respective portions of perimeter edges of the brake strip 2 and of the supporting element 3 joining the perimeter faces 4c and 4d of a respective spoke 4.

In other words, the perimeter face 2d of the brake strip 2 facing towards the inside of the disc 1, in particular towards the supporting element 3, is defined by the slots 8 of the disc 1.

With reference to each spoke 4 of the brake disc 1, the perimeter faces 4c and 4d of two consecutive holes or slots 8 define the circumferential extension of the spoke 4.

The perimeter faces 4c and 4d extend according to respective directions of radial extension 1b of the brake disc 1.

Each spoke 4 of the brake disc 1 can have a slot or hole 7, preferably a through hole or slot, made in a respective internal portion of the spoke 4, in particular between the respective perimeter faces 4c, 4d.

According to this invention, the thickness of the connecting portion or spoke 4 is less than the thickness of the supporting element 3 and/or of the brake strip 2.

According to this invention and according to the first embodiment of the brake disc 1 illustrated in Figures 1 and 2, each spoke 4 has one or more internal recessed portions 5 extending along a radial direction 1b and axial direction 1a of the brake disc 1.

The internal recessed portions 5 extend at least in part along a circumferential direction 1c of the brake disc 1.

The term internal recessed portion 5 means a hollow portion made in the axial thickness of the spoke 4, between the respective end faces 4a and 4b, end faces 4a and 4b excluded.

The internal recessed portion 5 has a respective axial depth defined along the direction of axial extension of the brake disc 1, in particular along a direction parallel to the main axis 1a of rotation.

The internal recessed portion 5 has a respective radial extension defined along a respective direction of radial extension 1b of the brake disc 1. Preferably, according to this embodiment, the shape of the internal recessed portion 5 is of a laminar type.

With reference to each spoke 4, the internal recessed portion 5 extends from a respective perimeter face 4c, 4d of the spoke 4 itself.

The internal recessed portion 5 has a respective circumferential extension defined along a direction of circumferential extension of the brake disc 1. More specifically, according to this embodiment, each recessed portion 5 extends from a respective perimeter face 4c, 4d of the spoke and is blind inside the spoke 4 itself.

Preferably, each internal recessed portion 5 extends inside the spoke 4 up to the centreline area of the spoke 4.

In other words, according to this embodiment, the internal recessed portion 5 does not pass through from one perimeter face 4c, 4d to the other of a respective spoke 4.

According to the first embodiment of brake disc 1, each spoke 1 has a plurality of internal recessed portions 5 made in the axial thickness of the spoke 4 between the respective end faces 4a and 4b, end faces 4a and 4b excluded.

Preferably, the internal recessed portions 5 are made in such a way as to be offset relative to one another.

In other words, with reference to the perimeter faces 4c, 4d of a respective spoke 4, the internal recessed portions 5 extend alternately from one perimeter face 4c and from the other 4d.

With reference to each spoke 4, the internal recessed portions 5 are arranged at a respective distance from each other, with reference to the direction of axial extension of the spoke 4, in particular parallel to the axis of rotation 1a of the brake disc 1.

In the case illustrated in this specification, each spoke 4 has three internal recessed portions 5, two of which extend from the same perimeter face 4c, and the remaining recessed portions 5 extends from the other perimeter face 4d.

The internal recessed portion 5 is positioned in an intermediate position relative to the two recessed portions 5 which extend from the same perimeter face 4c.

Advantageously, the internal recessed portions 5 induce an elastic bending capacity of the spokes 4 which allows a reduced misalignment between the brake strip 2 and the supporting element 3, a misalignment parallel to the plane in which the internal recessed portions 5 lie, or angular or combined.

The elastic bending capacity of the spokes 4 of the brake disc 1 is determined according to this invention by the lightening of the spoke 4 due to the consequent removal of material of the internal recessed portion 5.

The one or more internal recessed portions 5 are configured to define an average axial thickness of a respective spoke 4 which is less than the axial thickness of the brake strip 2 and/or of the supporting element 3.

The average axial thickness of the spoke 4 according to the first embodiment is defined as a value equal to the distance between the end faces 4a, 4b of a respective spoke 4 from which is subtracted the axial depth one or more internal recessed portions 5.

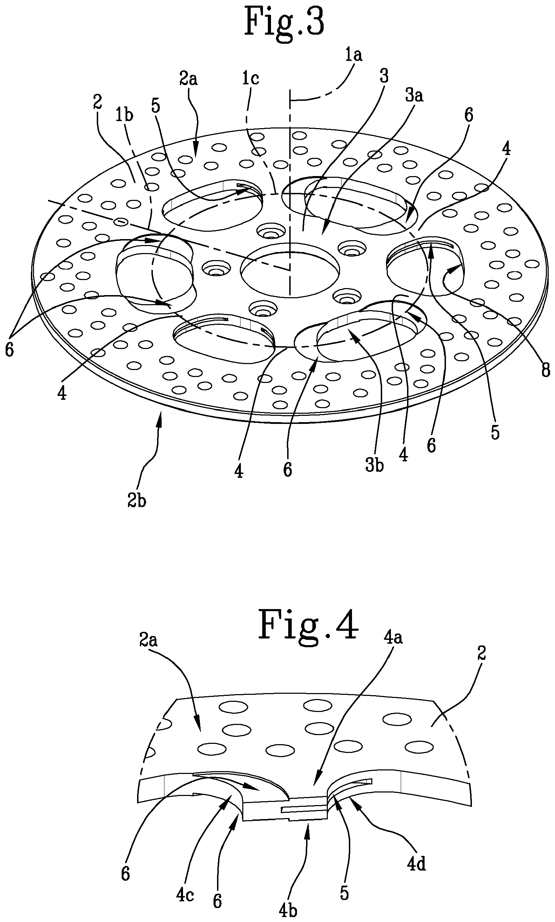

With reference to the second embodiment and relative variant of the brake disc 1 illustrated in Figures 3 to 6, each spoke 4 has one or more superficial recessed portions 6, extending in a radial 1b and axial 1a direction of the brake disc 1, made at a respective end face 4a, 4b.

The superficial recessed portions 6 extend at least in part along a circumferential direction 1c of the brake disc 1.

The superficial recessed portion 6 has an axial thickness defined along the direction of axial extension of the brake disc 1, in particular along a direction parallel to the main axis 1a of rotation.

Preferably, according to the second embodiment, each end face 4a, 4b of a respective surface spoke 4 has a superficial recessed portion 6.

The superficial recessed portion 6 is a lowered portion relative to the corresponding end face 4a, 4b of the spoke 4 on which it is made, defining a corresponding axial depth.

The thickness of the superficial recessed portion 6 is determined along a direction of axial extension of the brake disc 1, in particular along a direction parallel to the main axis 1a of rotation.

The superficial recessed portion 6 extends from one of the perimeter faces 4c, 4d of the respective spoke 4.

The superficial recessed portion 6 has a respective circumferential extension defined along a direction of circumferential extension of the brake disc 1.

Preferably, the superficial recessed portion 6 extends up to the centreline area of the spoke 4.

Alternatively, according to a second variant embodiment, not illustrated, the superficial recessed portion 6 extends from one perimeter face 4c, 4d of a respective spoke 4 to the other.

The superficial recessed portion 6 has a respective radial extension defined along a respective direction of radial extension 1b of the brake disc 1.

Preferably, according to this embodiment, the shape of the superficial recessed portion 6 is of a laminar type.

Preferably, according to this embodiment, each spoke 4 comprises at least one internal recessed portion 5 made in the axial thickness defined by the respective end faces 4a and 4b, end faces 4a, 4b excluded.

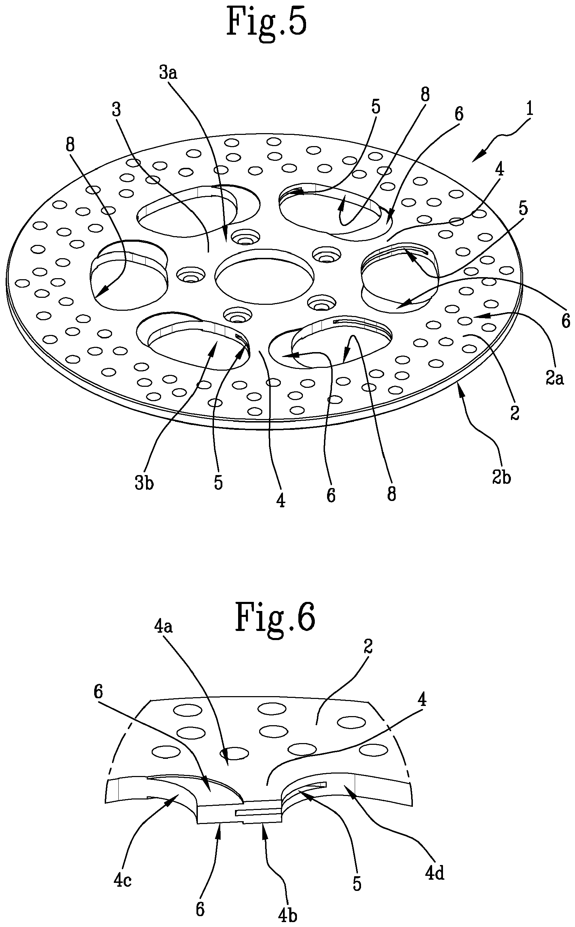

According to this invention and according to the second embodiment of the brake disc 1 illustrated in Figures 3 and 6, each spoke 4 has one or more internal recessed portions 5 extending along a radial direction 1b and axial direction 1a of the brake disc 1.

The internal recessed portions 5 extend at least in part along a circumferential direction 1c of the brake disc 1.

The term internal recessed portion 5 means a hollow portion made in the axial thickness of the spoke 4, between the respective end faces 4a and 4b, end faces 4a and 4b excluded.

The internal recessed portion 5 has a respective axial depth defined along the direction of axial extension of the brake disc 1, in particular along a direction parallel to the main axis 1a of rotation.

The internal recessed portion 5 has a respective radial extension defined along a respective direction of radial extension 1b of the brake disc 1. Preferably, according to this embodiment, the shape of the internal recessed portion 5 is of a laminar type.

With reference to each spoke 4, the internal recessed portion 5 extends from a respective perimeter face 4c, 4d of the spoke 4 itself.

The internal recessed portion 5 has a respective circumferential extension defined along a direction of circumferential extension of the brake disc 1. More specifically, according to this embodiment, each recessed portion 5 extends from a respective perimeter face 4c, 4d of the spoke and is blind inside the spoke 4 itself.

Preferably, each internal recessed portion 5 extends inside the spoke 4 up to the centreline area of the spoke 4.

In other words, according to this embodiment, the internal recessed portion 5 does not pass through from one perimeter face 4c, 4d to the other of a respective spoke 4.

Alternatively, according to a second variant embodiment, not illustrated, the internal recessed portion 5 extends from one perimeter face 4c, 4d of a respective spoke 4 to the other.

Preferably, according to this embodiment, the shape of the internal recessed portion 5 is of a laminar type.

Preferably, with reference to each spoke 4, the one or more internal recessed portions 5 and the one or more superficial recessed portions 6 are made in such a way as to be offset from one another.

In other words, with reference to the perimeter faces 4c, 4d of a respective spoke 4, the one or more internal recessed portions 5 and the one or more superficial recessed portions 6 extend alternatively starting from one perimeter face 4c and from the other 4d.

With reference to each spoke 4, the one or more internal recessed portions 5 are arranged at a respective distance from the one or more superficial recessed portions 6, with reference to the direction of axial extension of the spoke 4, in particular parallel to the axis of rotation 1a of the brake disc 1.

In particular, considering a single internal recessed portion 5 it is positioned in a position preferably intermediate relative to the two superficial recessed portions 6 made at a respective end face 4a, 4b.

In the case illustrated in this specification, each spoke 4 has the superficial recessed portions 6 of the end faces 4a, 4b extending from the same perimeter face 4c, and the internal recessed portion 5 extending from the other perimeter face 4d.

In other words, with reference to each spoke 4, the internal recessed portion 5 and the superficial recessed portion 6 extend from respective perimeter faces 4c, 4d different to each other.

With reference to the second embodiment illustrated in Figures 3 and 4, at least two adjacent and consecutive spokes 4 have the superficial recessed portions 6 arranged facing one another and at least two adjacent and consecutive spokes 4 have the internal recessed portions 5 arranged facing one another.

Advantageously, this arrangement makes it possible to mount the brake disc 1 without distinction on the right-hand side or on the left-hand side of the hub of a rotary element or of the wheel of the vehicle.

With reference to the variant of the second embodiment illustrated in Figures 5 and 6, the superficial recessed portions 6 of a spoke 4 are facing the internal recessed portion 5 of the spoke 4 adjacent and consecutive to it.

This arrangement makes it possible to mount the brake disc 1 on a single side, either right-hand or left-hand, of the hub of a rotary element or of the wheel of the vehicle.

It should also be noted that the second embodiment of the brake disc 1, and its variant, are preferable to the first embodiment if the thickness of the brake disc 1 is reduced.

According to the second embodiment, and relative variant, the average axial thickness of the spoke 4 is defined as a value equal to the distance between the end faces 4a, 4b of a respective spoke 4 from which is subtracted the axial depth of one or more internal recessed portions 5 and one or more superficial recessed portions 6.

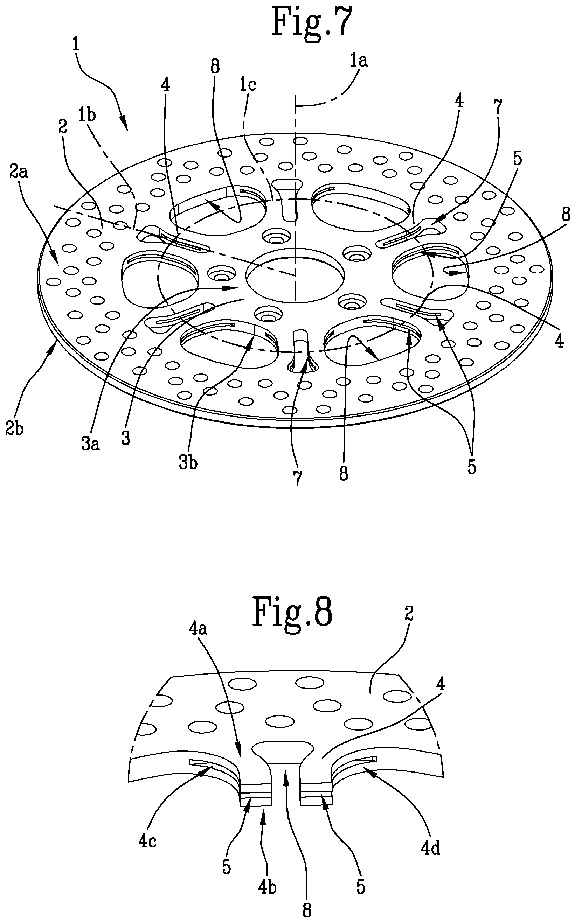

With reference to third embodiment of brake disc 1 illustrated in Figures 7 and 8, each spoke 4 has at least one internal recessed portion 5 made in the axial thickness of the spoke 4 between the respective end faces 4a and 4b, end faces 4a and 4b excluded.

The internal recessed portion 5 passes through from one perimeter face 4c, 4d to the other of a respective spoke 4.

According to this invention and according to the third embodiment of the brake disc 1 illustrated in Figures 7 and 8, each spoke 4 has one or more internal recessed portions 5 extending along a radial direction 1b and axial direction 1a of the brake disc 1.

The internal recessed portions 5 extend at least in part along a circumferential direction 1c of the brake disc 1.

The term internal recessed portion 5 means a hollow portion made in the axial thickness of the spoke 4, between the respective end faces 4a and 4b, end faces 4a and 4b excluded.

The internal recessed portion 5 has a respective axial depth defined along the direction of axial extension of the brake disc 1, in particular along a direction parallel to the main axis 1a of rotation.

The internal recessed portion 5 has a respective radial extension defined along a respective direction of radial extension 1b of the brake disc 1.

The internal recessed portion 5 has a respective circumferential extension defined along a direction of circumferential extension of the brake disc 1. With reference to each spoke 4, the internal recessed portion 5 extends from one respective perimeter face 4c, 4d to the other.

In other words, according to this embodiment, the internal recessed portion 5 passes through from one perimeter face 4c, 4d to the other of a respective spoke 4.

Preferably, according to this embodiment, the shape of the internal recessed portion 5 is of a laminar type.

With reference to the brake disc 1 of the variant of the third embodiment, each spoke 4 has a slot or hole 7, preferably a through slot or hole, made in a respective internal portion of the spoke 4.

The internal recessed portion 5 of each spoke 4 passes through and is in communication with the respective slot or hole 7.

According to the third embodiment, the average axial thickness of the spoke 4 is defined as a value equal to the distance between the end faces 4a, 4b of a respective spoke 4 from which is subtracted the axial depth of one or more internal recessed portions 5.

It should also be noted that with reference to the first, second and third embodiment and any variations, as illustrated in Figures 1 to 8, the internal recessed portions 5 and/or the superficial recessed portions 6 extend in a radial direction of the disc 1.

In other words, the extension in a radial direction 1b of the disc 1 defines the width of the internal recessed portion 5 and/or of the superficial recessed portion 6.

More specifically, the internal recessed portions 5 and/or superficial recessed portions 6 extend at least partly along the radial extension of a respective spoke 4.

In the embodiments illustrated, the internal recessed portions 5 and/or superficial recessed portions 6 extend along the entire radial extension of a respective spoke 4.

In the embodiments illustrated, the internal recessed portions 5 and/or the superficial recessed portion 6 extend at least in part along a circumferential direction of the disc 1.

More specifically, the internal recessed portions 5 of the third embodiment of brake disc 1 extend along the entire circumferential extension of a respective spoke 4.

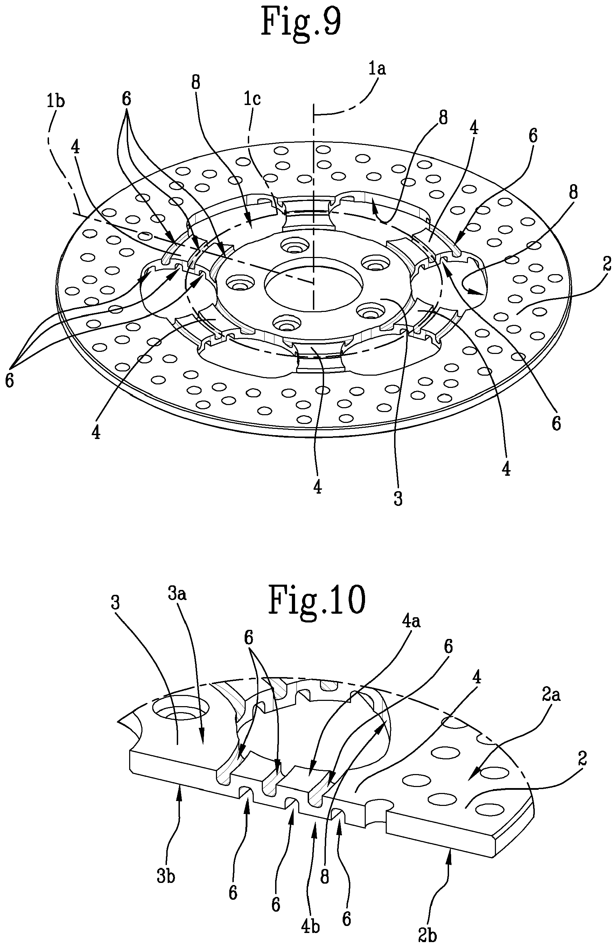

With reference to the fourth embodiment of the brake disc and the relative variant 1 illustrated in Figures 9 to 12, each spoke 4 comprises at least one superficial recessed portion 6 extending in a circumferential manner along an end face 4a and at least one superficial recessed portion 6 extending in a circumferential manner along the other end face 4b.

In this embodiment, the superficial recessed portions 6 are made alternately at one end face 4a and the other end face 4b, according to a direction of radial extension 1b of the disc 1.

In other words, the one or more superficial recessed portion 6 made at an end face 4a are offset with respect to the one or more superficial recessed portions 6 made at the other end face 4b, with reference to the direction of radial extension 1b of the disc 1.

The offset arrangement of the superficial recessed portions 6 with reference to the end faces 4a and 4b gives to each spoke 4 an undulating profile according to a direction of radial extension 1b of the disc 1.

With reference to the end faces 4a, 4b of a respective spoke 4, the superficial recessed portions 6 extend from one perimeter face 4c, 4d to the other, along a direction of circumferential extension 1c of the disc 1.

In other words, each superficial recessed portion 6 extends along the entire circumferential extension of each spoke 4.

Preferably, each spoke 4 has at least two superficial recessed portions 6 extending in a circumferential manner along an end face 4a and at least two superficial recessed portions 6 extending in a circumferential manner along the other end face 4a.

With reference to each spoke 4, the superficial recessed portions 6 are arranged at a respective distance from one another, with reference to the direction of radial extension 1b of the disc 1.

According to the fourth embodiment, the superficial recessed portions 6 are in the form of grooves which give each spoke 4 a "concertina" shape.

The superficial recessed portion 6 is a lowered portion relative to the corresponding end face 4a, 4b of the spoke 4 on which it is made, defining a corresponding axial depth, in particular along a direction parallel to the main axis 1a of rotation.

Advantageously, the elastic bending capacity of the spokes 4 having the superficial circumferential recessed portions 6 allows a reduced misalignment, radial or angular or combined, between the brake strip 2 and the supporting element 3.

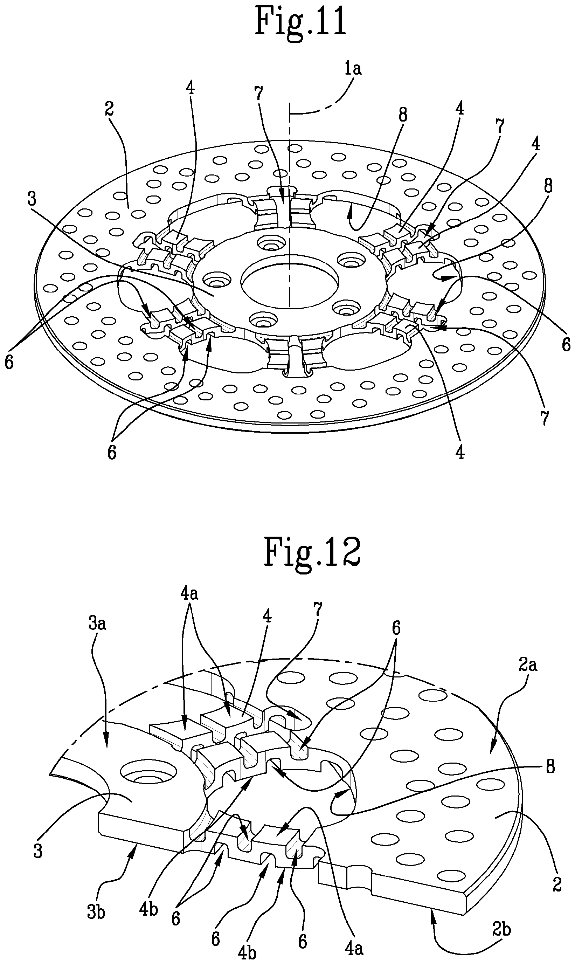

With reference to the variant of the fourth embodiment illustrated in Figures 11 and 12, each spoke 4 has a through slot or hole 7, preferably a through slot or hole, made in a respective internal portion of the spoke 4. This variant is advantageous if it is necessary to calibrate the elastic bending capacity of the spokes 4 without adversely affecting the bending-twisting rigidity of the brake disc 1.

With reference to the fourth embodiment and relating to the variant, the average axial thickness of the spoke 4 is defined as a value equal to the distance between the end faces 4a, 4b of a respective spoke 4 from which is subtracted the axial depth of the superficial recessed portion 6.

With reference to the fourth embodiment and relating to the variant, each spoke 4 may have a variable thickness and preferably decreasing according to a direction of radial extension 1b of the disc 1 from the supporting element 3 towards the brake strip 2.

The variable thickness is defined by the variation in the depth of the superficial recessed portions 6, preferably increasing in a direction of radial extension of the disc 1 from the supporting element 3 towards the brake strip 2.

Advantageously, this variation in thickness makes it possible to obtain a greater flexibility of the spoke 4 with the same stress status, determined by the loads acting on the brake disc 1.

It should be noted that, with reference to fourth embodiment of the brake disc 1 and the relative variant, each superficial recessed portion 6 extends along a curvilinear extension, as illustrated in Figures 9 to 12.

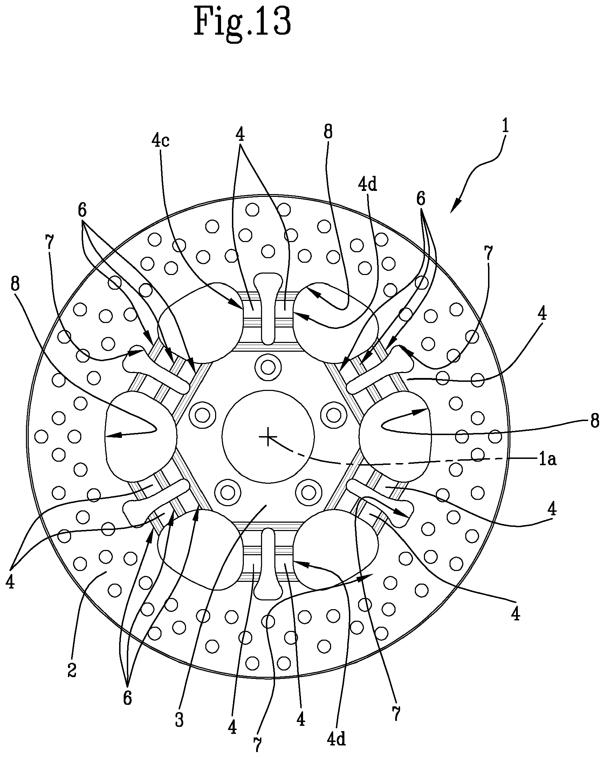

With reference to Figure 13, the alternative embodiment of the variant of the fourth embodiment of the brake disc 1 is characterized in that each superficial recessed portion 6 extends along a rectilinear extension. Overall, the superficial recessed portions 6 with a rectilinear alignment which extend at the same distance from the axis 1a of rotation of the brake disc 1 define a polygonal extension along a circumferential direction 1c of the brake disc 1.

With reference to the fourth embodiment of the brake disc 1 and the relative variant, each spoke 4 has a plurality of superficial recessed portions 6 made on an end surface 4a, in particular three, and a plurality of superficial recessed portions 6 made on the other end face 4b, in particular three, preferably equal in number.

With reference to each end face 4a and 4b and to each spoke 4, each superficial recessed portion 6 is positioned at a respective distance from the main axis 1a of rotation.

Overall, the spokes 4 of the brake disc 1 have respective superficial recessed portions 6 positioned at the same distance from the main axis 1a of rotation.

With reference to the fifth embodiment of the brake disc 1 illustrated in Figures 14 and 15, the brake disc 1 has at least one superficial recessed portion 6 positioned along an end face 4a of the connecting portion 4 and at least one superficial recessed portion 6 positioned along the other end face 4b of the connecting portion 4.

With reference to each of the end faces 4a, 4b of the connecting portion 4, the brake disc 1 has a single superficial recessed portion 6 extending according to the circumferential direction 1b and radial direction 1a of the brake disc 1.

The superficial recessed portion 6 has a spiral conformation a central point of which is at the rotation axis 1a of the brake disc 1.

The spiral of the superficial recessed portion 6 having the minimum diameter is located in the proximity of the supporting element 3 and the spiral having the maximum diameter is located in the proximity of the brake strip 2.

Each superficial recessed portion 6 extends according to an axis 1a of the brake disc 1.

The superficial recessed portion 6 has an axial thickness defined along the direction of axial extension of the brake disc 1, in particular along a direction parallel to the main axis 1a of rotation.

The superficial recessed portion 6 realised at an end face 4a is staggered with respect to the superficial recessed portion 6 realised at the other end face 4b.

Preferably, the spiral configuration of the superficial recessed portions 6 of one of the end faces 4a is in the same direction as the other. Alternatively, the spiral configuration of the superficial recessed portions 6 of one of the end faces 4a is in the opposite direction to the other.

The offset arrangement of the superficial recessed portions 6 with reference to the end faces 4a and 4b gives to the connecting portion 4 an undulating profile according to a direction of radial extension 1b of the brake disc 1, as shown in Figure 15.

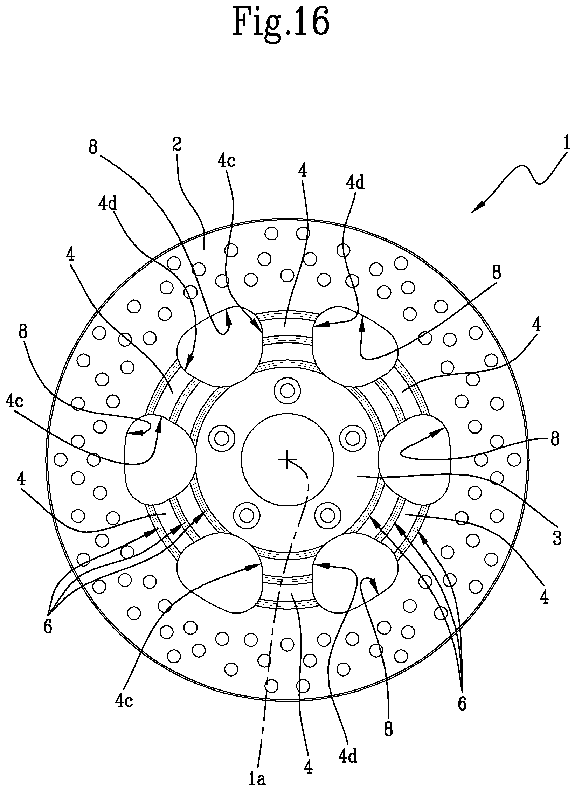

The variant of the fifth embodiment of Figure 16 is characterized by the presence of a plurality of through holes or slots 8, preferably through holes or slots, defining a plurality of spokes 4 for connecting the supporting element with the brake strip 2.

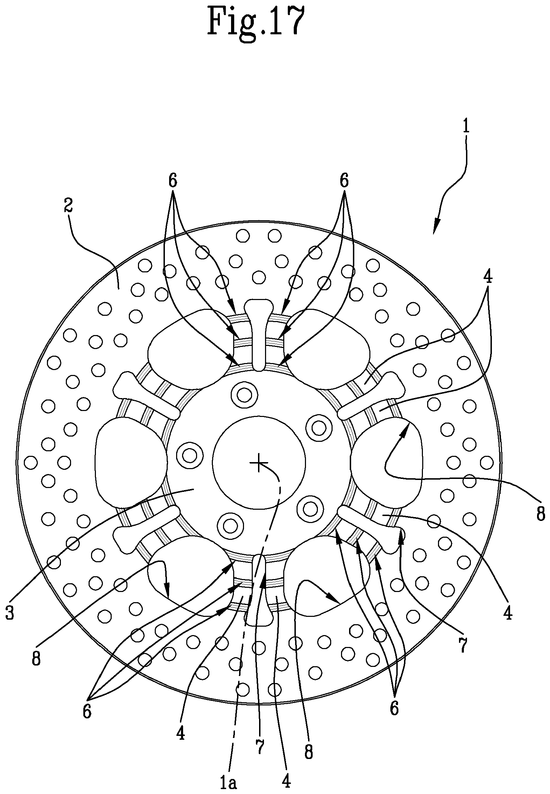

With reference to the variant of Figure 17, the brake disc 1 has a plurality of through holes or slots 8, preferably through holes or slots, defining a plurality of spokes 4 for connecting the supporting element with the brake disc 2. Each spoke 4 has a slot or hole 7, preferably a through slot or hole, made in a respective internal portion of the spoke 4.

According to the alternative embodiments of Figures 16 and 17, each spoke 4 has a plurality of superficial recessed portions 6 extending in a circumferential manner along an end face 4a and a plurality of superficial recessed portions 6 extending in a circumferential manner along the other end face 4b.

The superficial recessed portion 6 made at an end face 4a is offset with respect to the one or more superficial recessed portions 6 made at the other end face 4b.

The offset arrangement of the superficial recessed portions 6 with reference to the end faces 4a and 4b gives to each spoke 4 an undulating profile according to a direction of radial extension 1b of the brake disc 1. With reference to the end faces 4a, 4b of a respective spoke 4, the superficial recessed portions 6 extend from one perimeter face 4c, 4d to the other, along a direction of circumferential extension 1c of the disc 1.

In other words, each superficial recessed portion 6 extends along the entire circumferential extension of each spoke 4.

With reference to each spoke 4, the superficial recessed portions 6 are arranged at a respective distance from one another, with reference to the direction of radial extension 1b of the brake disc 1, in particular relative to the axis of rotation 1a of brake disc 1.

More specifically, with reference to each end face 4a and 4b, the superficial recessed portions 6 of each spoke 4 are portions or stretches of a spiral extension having as the centre the axis of rotation 1a of the brake disc 1.

With reference to the fifth embodiment of the brake disc 1 and relative variants, the superficial recessed portion 6 is a lowered portion relative to the corresponding end face 4a, 4b of the connecting portion 4 or spoke 4 on which is made, defining a corresponding axial depth.

The average axial thickness of the connecting portion 4 or spoke 4 is defined as a value equal to the distance between the end faces 4a, 4b of a respective spoke 4 from which is subtracted the axial depth of the superficial recessed portion 6.

The connecting portion 4 or spoke 4 may have a variable thickness and preferably decreasing according to a direction of radial extension 1b of the disc 1 from the supporting element 3 towards the brake strip 2.

The variable thickness is defined by the variation in the depth of the superficial recessed portions 6, preferably increasing in a direction of radial extension 1b of the disc 1 from the supporting element 3 towards the brake strip 2.

With reference to fifth embodiment of the brake disc 1 and relative variants, each superficial recessed portion 6 extends along a curvilinear extension.

Alternatively, each superficial recessed portion 6 extends according to a straight line.

With reference to the fourth and fifth embodiments of the brake disc 1 and relative variants, each superficial recessed portion 6 extends along a direction of radial extension 1b of the disc 1.

In other words, the extension in a radial direction 1b of the disc 1 defines the width of the superficial recessed portion 6.

Each superficial recessed portion 6 may have a variable width, in particular increasing, according to a direction 1b of radial extension of the disc 1 from the supporting element 3 towards the brake strip 2.

With reference to the thickness of the internal recessed portions 5 or superficial recessed portions 6, it is preferably variable from a value at least equal to a third of the axial thickness of the brake disc 1 to a value at least equal to half of the axial thickness of the brake disc 1.

The brake disc 1 according to this invention makes it possible to obtain an adjustment capacity during the braking without using a "floating" or "semi-floating" elastic system for attaching the discs, reducing in this way the number of components necessary and, with it, the cost of the disc and the respective equipment necessary for its production.

The geometry of the internal and/or superficial recessed portions 5, 6 made on the spokes 4 and, if necessary, of the slots or holes 7 give the brake disc 1 according to the invention misalignment features which are parallel or angular or combined.

The brake disc 1 according to this invention may be installed without the need to modify an original braking system of a respective vehicle.

The brake disc 1 according to this invention is characterized by a greater capacity for dispersion of the thermal energy caused by the braking, due both to the greater heat exchange surface determined by the recesses and the effect of the ventilation produced by the geometry of the recesses, especially when the latter are through recesses.

In order to give to the brake strip 2 a bending capacity in such a way that it can adjust itself, in an axial and/or radial direction, during the action of the friction means, not illustrated, it has at the end faces 2a and 2b a plurality of portions 9 recessed relative to the end faces 2a and 2b.

The term recessed portions 9 means a portion of the brake strip 2 at which material has been removed of in such a way as to lighten the brake strip 2 itself.

The recessed portion 9 may be a through portion from one end face 2a and 2b to the other or may be blind relative to the end face 2a and 2b on which is made.

Each recessed portion 9 has a respective profile.

The profile of the recessed portion 9 defines the method of bending and deformation of the brake strip 2 following the thermal-mechanical action of the friction means, not illustrated.

The recessed portion 9 may be in the form of a hole 10, or slot 11, or notch 12 each with a respective profile, or a combination of the elements and the profiles.

According to this invention, the brake strip 2 has a plurality of recessed portions 9 each of which is located in the proximity of each connecting portion 4.

According to this invention, the brake strip 2 has a plurality of recessed portions 9 each of which is located in a portion of the strip 2 between two connecting portions 4, in particular facing the same hole or slot 8. Different configurations of the brake strip 2 are described below in relation to the arrangement of the recessed portions 9 and/or the respective shape.

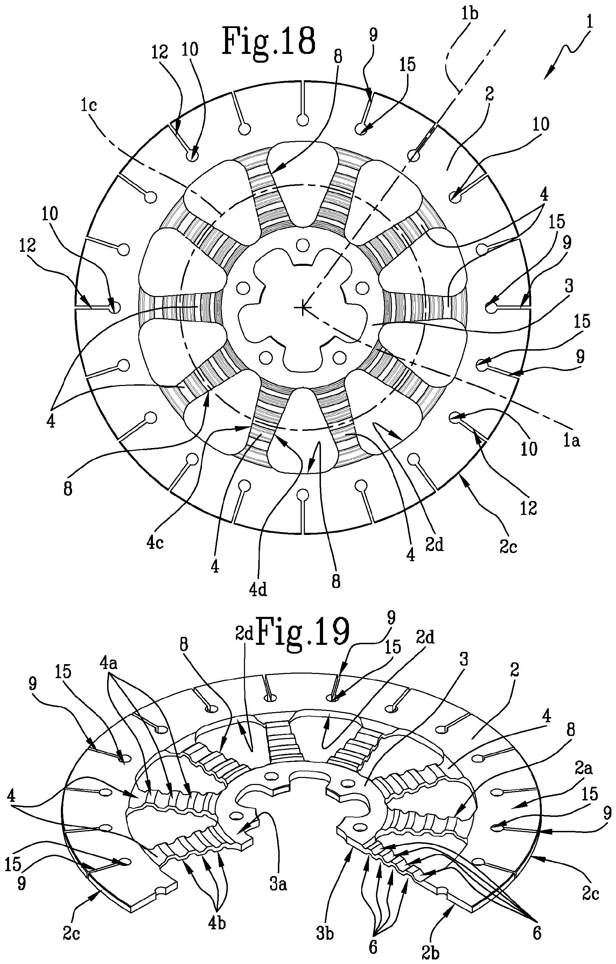

With reference to Figures 18 to 21, the brake strip 2 of the disc 1 has a plurality of recessed portions 9, extending from one end face 2a to the other end face 2b, each of which extends from the perimeter face 2c of the strip 2 facing towards the outside of the disc 1.

These through recessed portions 9 extend from the perimeter face 2c facing towards the outside of the disc 1 to a blind end 15 included the brake strip 2.

As illustrated in Figures 18 and 19, the through recessed portions 9 have a direction of radial extension 1b of the brake disc 1.

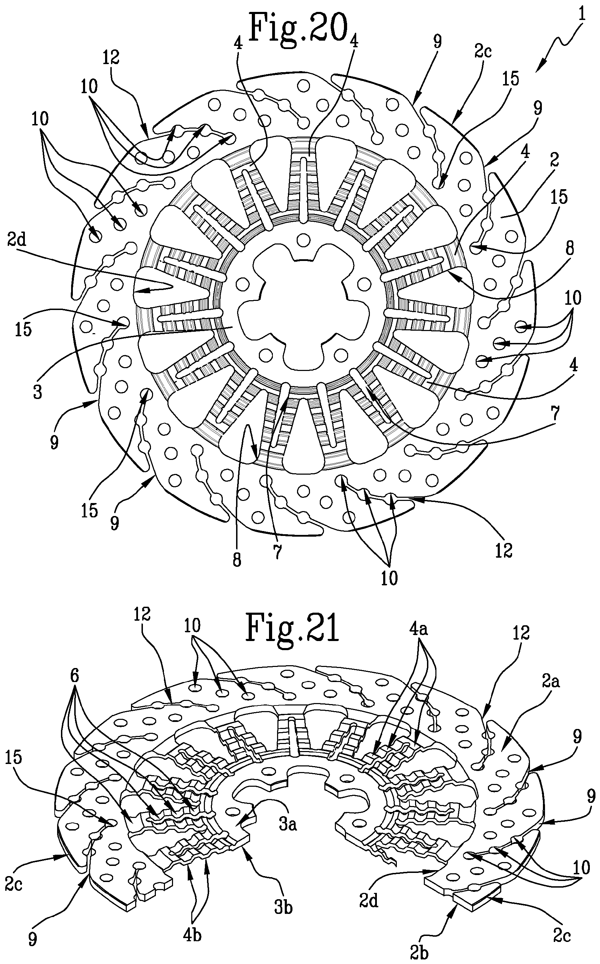

In this instance, each recessed portion 9 has the shape of a rectilinear notch 12 in a direction of radial extension 1b of the brake disc 1. Alternatively, as illustrated in Figures 20 and 21, the recessed portions 9 are in the form of a curved notch 12.

As shown in Figures 20 and 21, the brake strip 2 of the disc 1 has, in addition to the through recessed portions 9 as described, a plurality of holes 10 passing from one end face 2a to the other face 2b, preferably circular in shape.

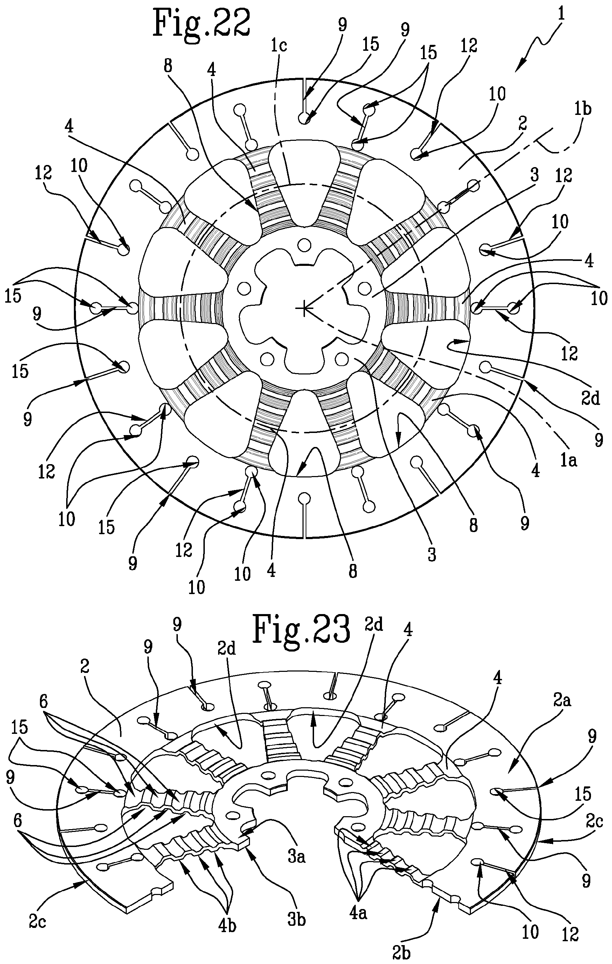

With reference to the second embodiment of Figure 22 and 23, the brake strip 2 has a plurality of recessed portions 9, passing from one end face to the other face 2a and 2b, which extend at least from the outer perimeter face 2c of the disc 1 up to a respective blind end 15 included in the brake strip 2 and a plurality of recessed portions 9, passing from one end face to the other face 2a and 2b, which extend in a respective internal portion of the strip 2, between the perimeter faces 2c and 2d of the strip 2.

The recessed portions 9 which extend in the internal portion of the strip 2 have the respective blind ends 15 in an internal portion of the brake strip 2 between the perimeter faces 2c and 2d of the strip 2.

More specifically, each recessed portion 9 extending at least from the outer perimeter face 2c of the disc 1 up to the respective blind end 15 is located in the zone of the strip 2 between two connecting portions 4.

Each recessed portion 9 extending in the internal portion of the strip 2, between the perimeter faces 2c and 2d of the strip 2, is located in the proximity of each connecting portion 4.

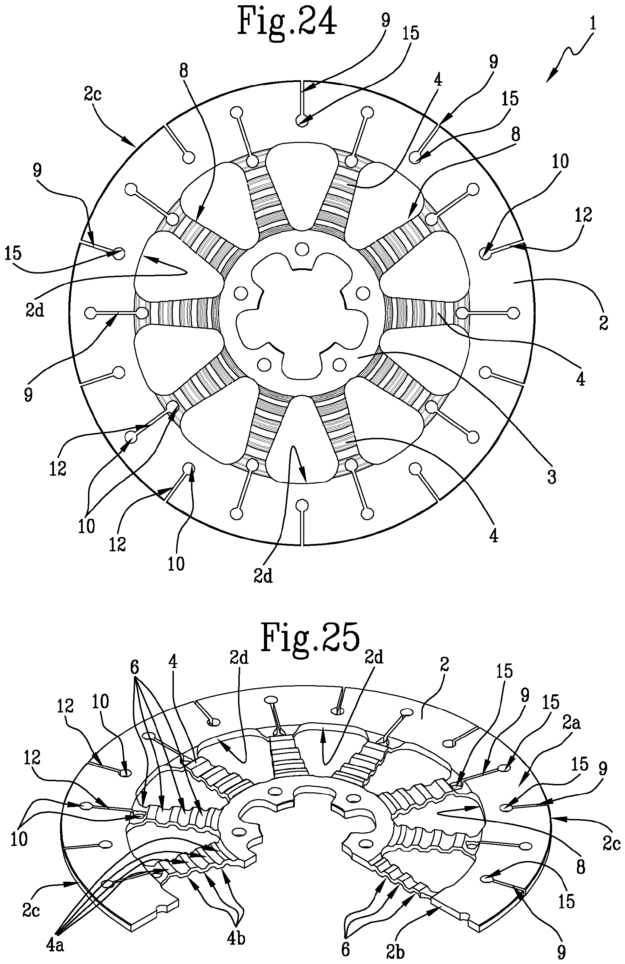

Alternatively, with reference to Figures 24 to 27, each recessed portion 9 extends from a respective internal blind end 15 of the brake strip 2, relative to the perimeter faces 2c and 2d of the strip 2, to a respective blind end 15 inside the respective connecting portion 4.

With reference to Figures 22 to 25, each recessed portion 9 is in the form of a notch 12 having a rectilinear profile.

With reference to Figures 22 to 25, each recessed portion 9 extends in a radial direction 1b of the disc 1.

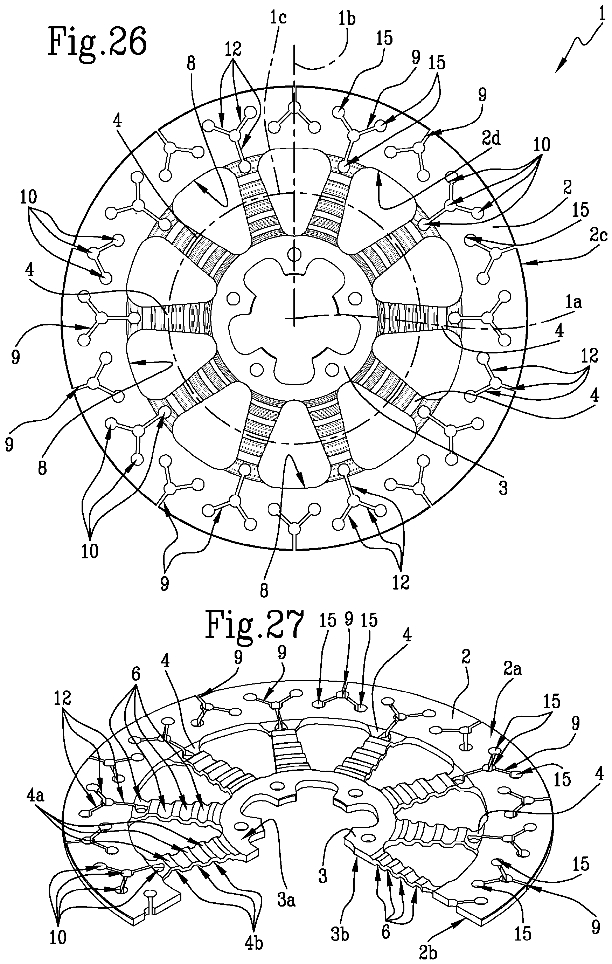

Figures 26 or 27 show that each recessed portion 9 is in the form of a notch 12 having a Y-shaped profile.

With reference to Figures 26 or 27, each recessed portion 9 extends in a radial direction 1b and in a circumferential direction 1c of the disc 1.

It should be noted that the recessed portions 9 are positioned in such a way that each recessed portion 9 has in an alternating fashion an overturned orientation with respect to the adjacent recessed portion 9. According to this shape, each through recessed portion 9 extends from the perimeter face 2c facing towards the outside of the disc 1 to a respective pair of blind ends 15 included in the brake strip 2.

Each recessed portion 9 extends from a respective pair of internal blind ends 15 of the brake strip 2, relative to the perimeter faces 2c and 2d of the strip 2, to a respective blind end 15 inside the respective connecting portion 4.

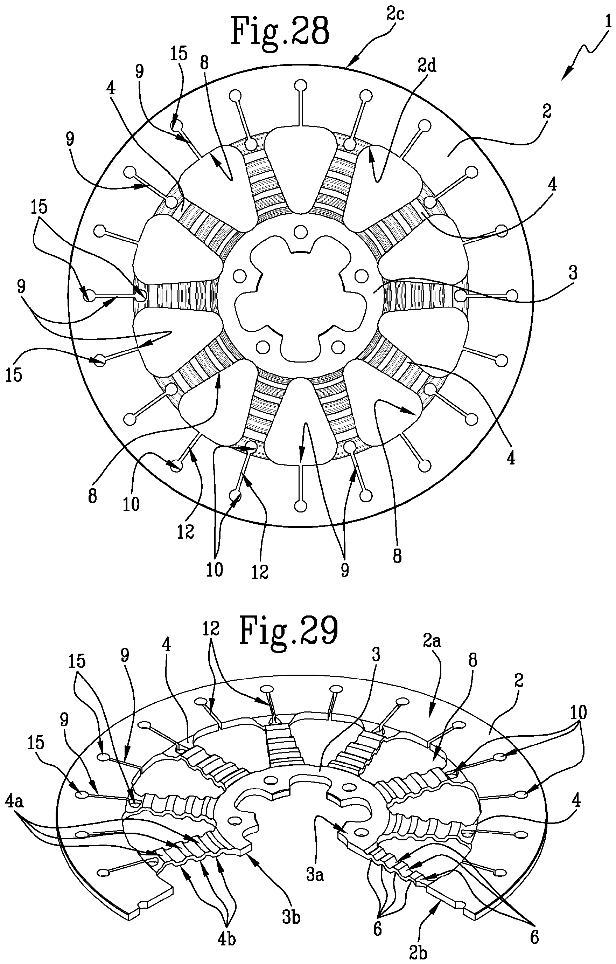

With reference to the embodiments of Figure 28 and 29, the brake strip 2 has a plurality of recessed portions 9, passing from one end face to the other face 2a and 2b, which extend at least from the internal perimeter face 2d of the disc 1 up to a respective blind end 15 included in the brake strip 2 and a plurality of recessed portions 9, passing from one end face to the other face 2a and 2b, which extend in a respective internal portion of the strip 2.

Each recessed portion 9 extends from a respective internal blind end 15 of the brake strip 2, relative to the perimeter faces 2c and 2d of the strip 2, to a respective blind end 15 inside the respective connecting portion 4. Alternatively, the recessed portions 9 which extend in the internal portion of the strip 2 have the respective blind ends 15 in an internal portion of the brake strip 2 between the perimeter faces 2c and 2d of the strip 2.

Each recessed portion 9 extending at least from the internal perimeter face 2d of the disc 1 up to the respective blind end 15 is located in the zone of the strip 2 between two connecting portions 4.

Each recessed portion 9 extending in the internal portion of the strip 2 is located at each connecting portion 4.

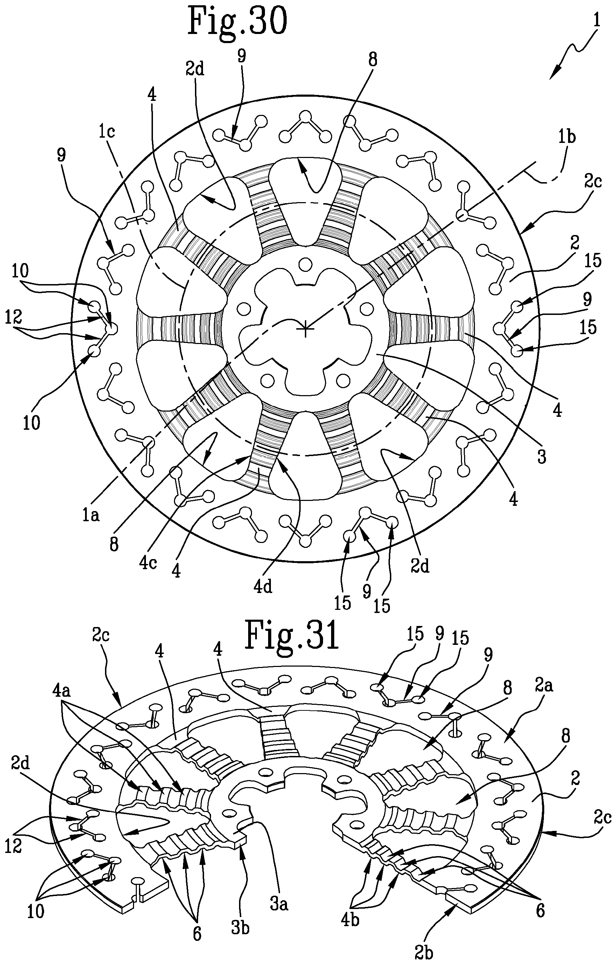

According to this embodiment, each recessed portion 9 has the shape of a rectilinear notch 12 in a direction of radial extension 1b of the brake disc 1. With reference to the embodiment of Figures 30 and 31, the brake strip 2 has a plurality of recessed portions 9, passing from one end face to the other face 2a and 2b, located in an internal portion of the strip 2, between the outer perimeter face 2c and the internal perimeter face 2d.

More specifically, the recessed portions 9 are included in a circular crown inside the brake strip 2, between the outer perimeter face 2c and the inner perimeter face 2d.

In this embodiment, each recessed portion 9 has a "V" shape.

It should be noted that the recessed portions 9 are positioned in such a way that each recessed portion 9 has in an alternating fashion an overturned orientation with respect to the adjacent recessed portion 9.

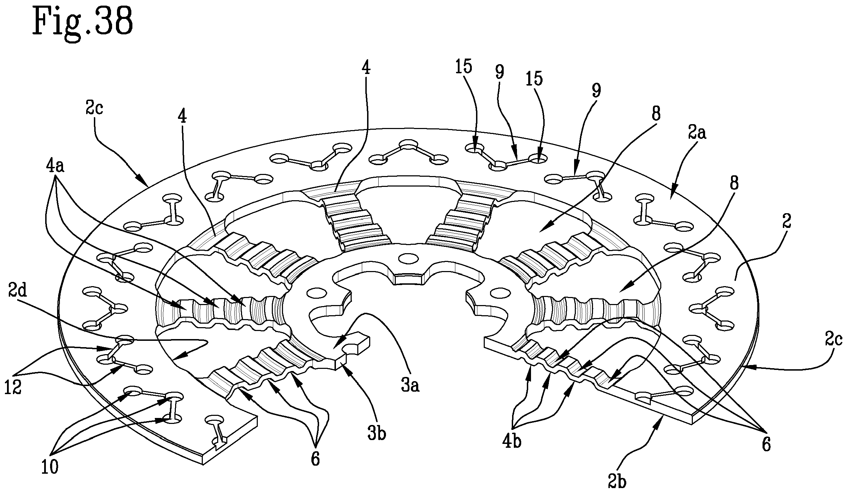

Figure 38 shows a variant of the embodiment of Figures 30 and 31 wherein at least one end face 2a has the recessed portions 9 blind, and not passing from one face 2a to the other face 2b.

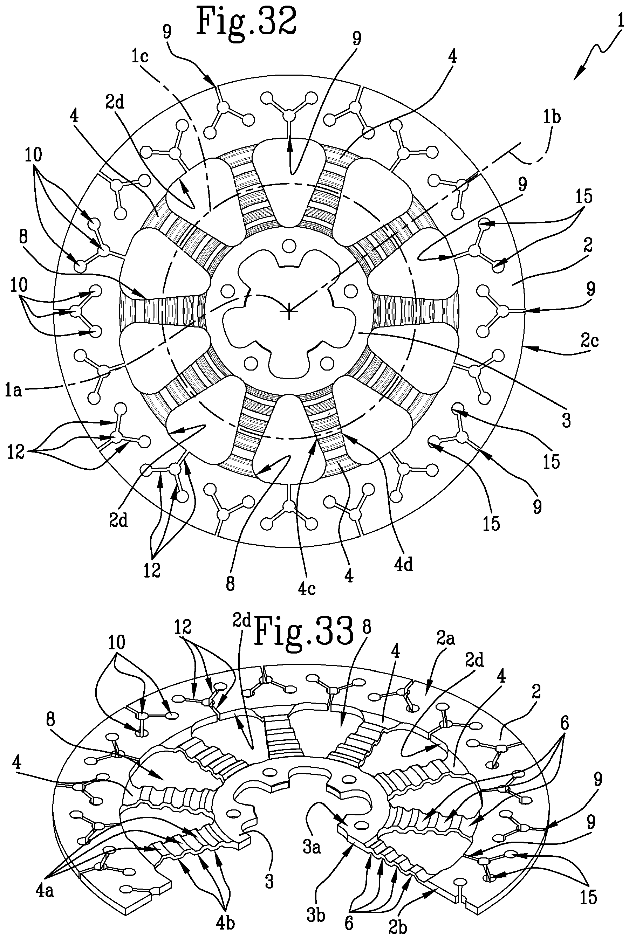

With reference to embodiments of Figures 32 to 37, the disc 1 has a plurality of recessed portions 9, passing from one end face to the other face 2a and 2b, which extend from the perimeter face 2c facing towards the outside of the disc 1, and a plurality of recessed portions 9, passing from one end face to the other face 2a and 2b, which extend from the perimeter face 2d facing towards the inside of the disc 1.

More specifically, a recessed portion 9 which extends at least from the perimeter face 2c facing towards the outside of the disc 1 is positioned in an alternating fashion to a recessed portion 9 which extends at least from the perimeter face 2d facing towards the inside of the disc 1.

Each recessed portion 9 extending from the perimeter face 2c facing towards the outside of the disc 1 to the respective blind end 15 is located in the proximity of each connecting portion 4.

Each recessed portion 9 extending at least from the internal perimeter face 2d of the disc 1 up to the respective blind end 15 is located in the zone of the strip 2 between two connecting portions 4.

each recessed portion 9 extends in a radial direction 1b and in a circumferential direction 1c of the disc 1.

Each recessed portion 9 has a Y-shaped profile.
Figures 32, 33 and 36, 37 show that each recessed portion 9 has a Y-shaped profile, extending according to a straight line.

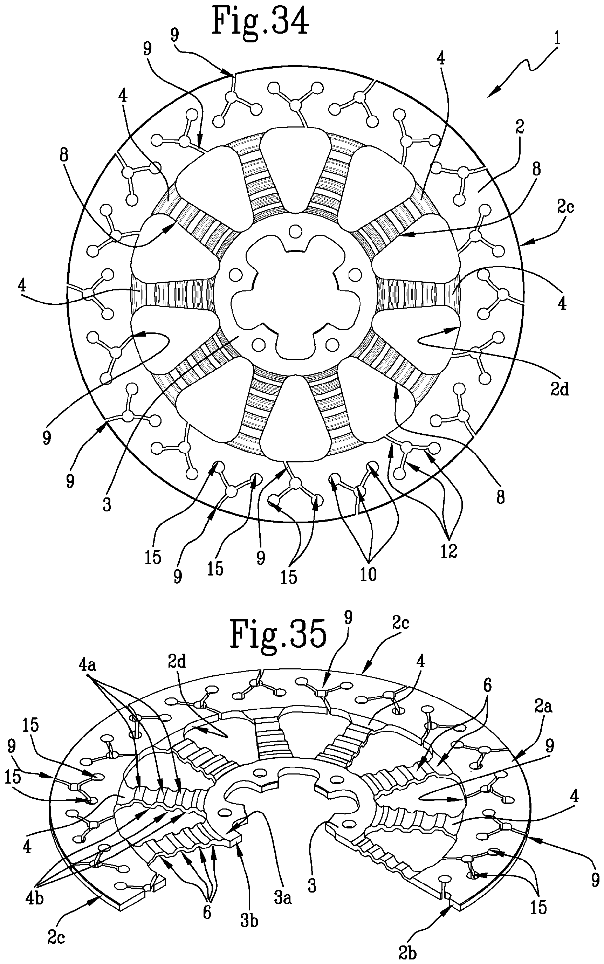

Figures 34 and 35 show that each recessed portion 9 has a Y-shaped profile, extending according to a curvilinear line.

According to this shape, each through recessed portion 9 extends from the perimeter face 2c facing towards the outside of the disc 1 to a respective pair of blind ends 15 included in the brake strip 2.

Each through recessed portion 9 extends from the perimeter face 2d facing towards the inside of the disc 1 up to a respective pair of blind ends 15 included in the brake strip 2.

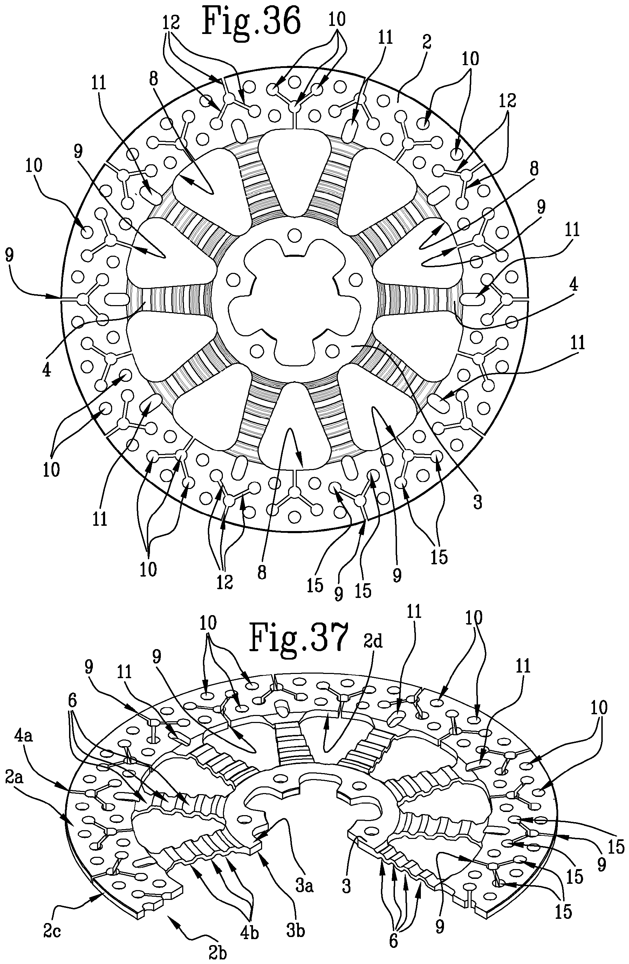

It should be noted that the recessed portions 9 are positioned in such a way that each recessed portion 9 has in an alternating fashion an overturned orientation with respect to the adjacent recessed portion 9. According to the embodiment of Figure 36 and 37, the brake strip 2 has, in addition to the through recessed portions 9 as described, a plurality of through holes 10 and slots 11.

More specifically, each slot 11 is positioned at a respective connecting portion 4.

Advantageously, the recessed portions 9 of the brake strip 2 result in zones of elastic compliance of the brake strip 2, that is to say, the presence of "elastic hinges" which allow the brake strip 2 to adopt suitable spatial configurations which are able to "misalign" under thermal-mechanical stress.

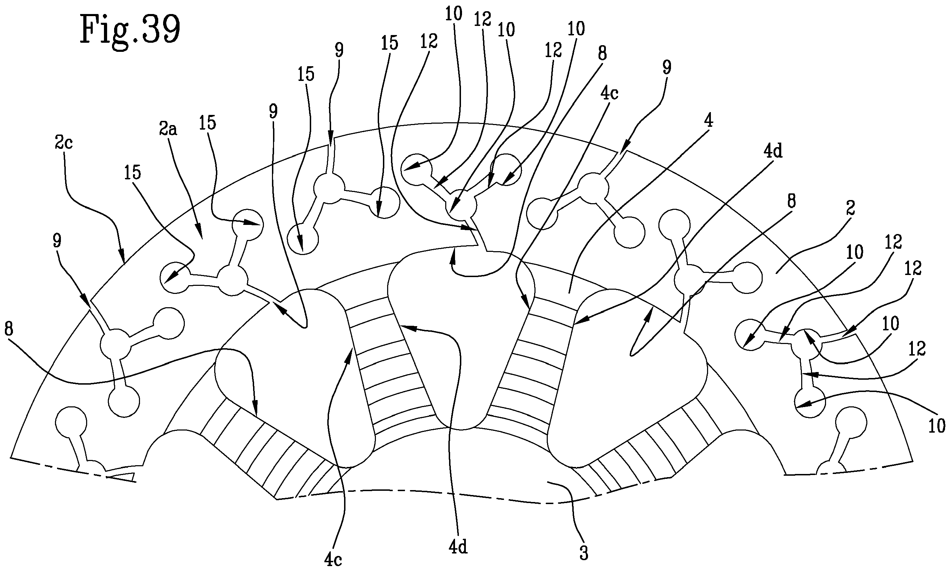

In this regard, Figure 39 shows the deformation of the brake strip 2 under possible operational conditions due to the presence of the recessed portions 9, in particular for this embodiment the recessed portions 9 in the form of notches 12 extend alternatively from the perimeter face 2c facing towards the outside and from the perimeter face 2d facing towards the outside.

The presence of the recessed portions 9 of the brake strip 2 leads in the direction of the so-called "additional unloading" used in mechanical design, that is, it renders the stress status uniform and reduces the concentration of stresses by the removal of material rather than through the strengthening of sections.

The compliance of the brake strip 2 means that the stress status of the connecting portions 4, due to the combination of loads and temperature during operation, does not exceed the yield limit of the material and, with it, does not causes residual deformations at the end of the braking.

This also results in the advantage induced by giving the brake disc a greater lightness and a smaller rotational inertia with respect to its main axis, relative to the yaw (in the case of a front brake disc) and to the oscillation (in the case of a rear brake disc), which all favours the ease of handling of the motorcycle and its dynamic behaviour.

A further advantage is represented by the greater heat dispersal capacity, due to the increased heat exchange surface and due to the "ventilating" effect of the recessed portions 9 of the brake strip 2.

The lightening of the brake strip 2, suitably configured and distributed on the brake strip 2, in addition to the cooling of the brake strip 2, also contribute to the dispersion of water and to the dressing of the friction material of the brake pads, which is the function of the lightening holes/slots usually present on the brake strip 2 of the brake discs known in the prior art.

The combination of the recessed portions 6 of the connecting elements 4 and the recessed portions 9 on the brake strip 2, whether they are blind or through, generates a high capacity of misalignment of the monolithic brake disc 1.

The recessed portions 9 of the brake strip 2 act as elastic hinges, which allow the brake strip 2 to adopt suitable spatial configurations which are able to deform freely under thermal-mechanical stress, notwithstanding the resistance of the brake disc 1 to the bending-twisting loads during operation and, lastly, the capacity of use in safety of the brake disc 1. Advantageously, the combination of the recessed portions of the connecting elements and the recessed portions on the brake strip, whether they are blind or through, generates a high capacity of misalignment of the monolithic brake disc.

## Claims

1. A monolithic brake disc comprising a brake strip (2), a supporting element (3) of the brake strip (2) and at least one connecting portion (4) of the supporting element (3) with the brake strip (2);
the brake strip (2), the supporting element (3) and the connecting portion (4) being a single mechanical part, as they derive from a machining of a single unfinished mechanical part;
the brake strip (2) has two end faces (2a, 2b) the distance between which defines the axial thickness of the brake strip (2);
the supporting element (3) has two end faces (3a, 3b) the distance between which defines the axial thickness of the supporting element (3); the connecting portion (4) has respective end faces (4a, 4b) whose distance defines the axial thickness of the spoke (4); the connecting portion (4) has one or more recessed portions (5, 6), in particular inside and/or superficial, made at least in a radial and axial extension of direction of the disc (1); each recessed portion (5, 6) having a respective axial depth defined along the axial extension direction of the disc (1); the average axial thickness of the connecting portion (4) being defined as a value equal to the distance between the end faces (4a, 4b) of the connecting portion (4), or axial thickness, from which is subtracted the axial depth of at least one recessed portion (5, 6), in particular internal or superficial;
**characterised in that**
a plurality of holes or slots (8), preferably through holes or slots, define the connecting portions (4), or spokes (4), of the supporting element (3) with the brake strip (2).

2. The brake disc according to claim 1, **characterised in that** the connecting portion (4) has one or more recessed portions (5,6), in particular internal and/or superficial, realised at least according to a circumferential direction of extension of the disc (1).

3. The brake disc according to claim 1, **characterised in that** each spoke (4) has a slot or hole (7), preferably a through slot or hole, afforded in a respective internal portion of the spoke (4).

4. The brake disc according to any one of the preceding claims, **characterised in that** each recessed portion (5,6) extends starting from one of the perimeter faces (4c, 4d) of a respective spoke (4) or extends from one perimeter face (4c, 4d) to the other; each spoke (4) having at least one internal recessed portion (5) realised in the axial thickness of the spoke (4) comprised between the end faces (4a, 4b) of the spoke (4), end faces (4a, 4b) excluded.

5. The brake disc according to claim 1 or 2, **characterized in that** it has at least one superficial recessed portion (6) along an end face (4a) of the connecting portion (4) and at least one superficial recessed portion (6) along the other end face (4b) of the connecting portion (4); with reference to the radial extension direction of the disc (1), the superficial recessed portions (6) are arranged at a respective distance from one another.

6. The brake disc according to claim 5, **characterized in that** each superficial recessed portion (6) extends from one perimeter face (4c, 4d) to the other of each spoke (4).

7. The brake disc according to claim 5 or 6, **characterized in that** the superficial recessed portion (6) is in the form of a gulley extending in a curved or straight direction.

8. The brake disc according to any one of claims 5 to 7, **characterised in that** the superficial recessed portion (6) has a variable depth and/or width, in particular growing, according to a radial extension direction of the disc (1) from the supporting element (3) towards the brake strip (2).

9. The brake disc according to any one of the preceding claims, **characterized in that** the connecting portion (4) or spoke (4) has a variable thickness, in particular decreasing according to a radial direction of extension of the disc (1) from the supporting element (3) towards the brake strip (2).

10. The brake disc according to any one of claims 1 to 9, **characterised in that** the brake strip (2) has at least at one end face (2a, 2b) a plurality of respective portions (9) recessed relative to the end faces (2a, 2b).

11. The brake disc according to claim 10, **characterized in that** the brake strip (2) of the disc (1) has at least a plurality of recessed portions (9), each of which extends from the perimeter face (2c) of the strip (2) facing towards the outside of the disc (1) up to one or more blind ends (15) included in the brake strip (2).

12. The brake disc according to claim 10 or 11, **characterised in that** the brake strip (2) has a plurality of recessed portions (9) which extend at least from the perimeter face (2c) facing towards the outside of the disc (1) up to at least one respective blind end (15) in the brake strip (2) and a plurality of recessed portions (9) which extend at least from a respective internal portion of the strip (2), between the perimeter faces (2c, 2d) of the strip (2).

13. The brake disc according to claim 12, **characterized in that** the recessed portions (9) which extend at least from the perimeter face (2c) facing towards the outside of the disc (1) are located in the zone of the strip (2) between two connecting portions (4), and the recessed portions (9) which extend in a respective inner portion of the strip (2), between the perimeter faces (2c, 2d) of the strip (2), are located in the proximity of each connecting portion (4).

14. The brake disc according to claim 10 or 11, **characterized in that** the brake strip (2) has a plurality of recessed portions (9) which extend at least from the perimeter face (2d) facing towards the inside of the disc (1) up to at least one respective blind end (15) in the brake strip (2) and a plurality of recessed portions (9) which extend at least from a respective inner portion of the strip (2), between the perimeter faces (2c, 2d) of the strip (2); the recessed portions (9) which extend at least from the perimeter face (2c) facing towards the outside of the disc (1) are located in the proximity of each connecting portion (4), and the recessed portions (9) which extend in a respective inner portion of the strip (2), between the perimeter faces (2c, 2d) of the strip (2), are located in the zone of the strip (2) between two connecting portions (4).

15. The brake disc according to any one claims 10 to 14, **characterized in that** each recessed portion (9) passes from one end face (2a) to the other face (2b) of the brake strip.

16. The brake disc according to any one claims 10 to 15, **characterized in that** the brake strip (2) of the disc (1) has a plurality of through holes (10) from one end face (2a) to the other face (2b), preferably circular in shape, and/or a plurality of slots (11), each slot (11) being preferably positioned at a respective connecting portion (4).

17. The brake disk according to any one of the preceding claims, **characterized in that** each recessed portion (9) of the brake strip has a respective profile defining the method of bending and deformation of the brake strip (2) in an operating condition; more specifically, the recessed portion (9) is in the form of a hole (10), or slot (11), or notch (12) each with a relative profile, or a combination of the elements (10, 11, 12) and respective profiles.

## Patentansprüche

1. Monolithische Bremsscheibe, umfassend einen Bremsstreifen (2), ein Halterungselement (3) für den Bremsstreifen (2) und mindestens einen Verbindungsabschnitt (4) des Halterungselements (3) mit dem Bremsstreifen (2),
wobei es sich beim Bremsstreifen (2), dem Halterungselement (3) und dem Verbindungsabschnitt (4) um ein einziges mechanisches Bauteil handelt, da diese aus einer Bearbeitung eines einzigen mechanischen Rohbauteils stammen,
wobei der Bremsstreifen (2) zwei Endseitenflächen (2a, 2b) aufweist, deren Abstand zueinander die axiale Dicke des Bremsstreifens (2) definiert,
wobei das Halterungselement (3) zwei Endseitenflächen (3a, 3b) aufweist, deren Abstand zueinander die axiale Dicke des Halterungselements (3) definiert, wobei der Verbindungsabschnitt (4) jeweilige Endseitenflächen (4a, 4b) aufweist, deren Abstand die axiale Dicke der Speiche (4) definiert, wobei der Verbindungsabschnitt (4) einen oder mehrere vertiefte Abschnitte (5, 6) insbesondere innenseitig und/oder oberflächlich aufweist, die mindestens in einer radialen und axialen Ausdehnung der Richtung der Scheibe (1) ausgebildet sind, wobei ein jeder vertiefter Abschnitt (5, 6) eine jeweilige axiale Tiefe aufweist, definiert entlang der axialen Ausdehnungsrichtung der Scheibe (1), wobei die durchschnittliche axiale Dicke des Verbindungsabschnitts (4) als ein Wert gleich dem Abstand zwischen den Endseitenflächen (4a, 4b) des Verbindungsabschnitts (4) oder der axialen Dicke, von der die axiale Tiefe des mindestens einen vertieften Abschnitts (5, 6) insbesondere innenseitig oder oberflächlich abgezogen wird, definiert ist, **dadurch gekennzeichnet, dass**
eine Vielzahl an Löchern oder Aussparungen (8), bei denen es sich vorzugsweise um Durchführungslöcher oder -aussparungen handelt, die Verbindungsabschnitte (4) oder Speichen (4) des Halterungselements (3) mit dem Bremsstreifen (2) definieren.

2. Bremsscheibe nach Anspruch 1, **dadurch gekennzeichnet, dass** der Verbindungsabschnitt (4) einen oder mehrere vertiefte Abschnitte (5, 6) insbesondere innenseitig und/oder oberflächlich aufweist, die mindestens gemäß einer Umfangsausdehnungsrichtung der Scheibe (1) realisiert sind.

3. Bremsscheibe nach Anspruch 1, **dadurch gekennzeichnet, dass** eine jede Speiche (4) eine Aussparung oder ein Loch (7) aufweist, vorzugsweise eine Durchführungsaussparung oder ein Durchführungsloch, ausgebildet in einem jeweiligen innenseitigen Abschnitt der Speiche (4).

4. Bremsscheibe nach einem der vorhergehenden Ansprüche, **dadurch gekennzeichnet, dass** ein jeder vertiefter Abschnitt (5, 6) sich ausgehend von einer der Umfassungsseitenflächen (4c, 4d) einer jeweiligen Speiche (4) erstreckt oder sich von einer Umfassungsseitenfläche (4c, 4d) zur anderen erstreckt, wobei eine jede Speiche (4) mindestens einen innenseitigen vertieften Abschnitt (5) aufweist, der in der axialen Dicke der Speiche (4) realisiert ist, enthalten zwischen den Endseitenflächen (4a, 4b) der Speiche (4), die Endseitenflächen (4a, 4b) ausgeschlossen.

5. Bremsscheibe nach Anspruch 1 oder 2, **dadurch gekennzeichnet, dass** sie mindestens einen vertieften Oberflächenabschnitt (6) entlang einer Endseitenfläche (4a) des Verbindungsabschnitts (4) und mindestens einen vertieften Oberflächenabschnitt (6) entlang der anderen Endseitenfläche (4b) des Verbindungsabschnitts (4) aufweist, wobei die vertieften Oberflächenabschnitte (6) gegenüber der radialen Ausdehnungsrichtung der Scheibe (1) in einem jeweiligen Abstand voneinander angeordnet sind.

6. Bremsscheibe nach Anspruch 5, **dadurch gekennzeichnet, dass** ein jeder vertiefte Oberflächenabschnitt (6) sich von einer Umfassungsseitenfläche (4c, 4d) zur anderen einer jeden Speiche (4) erstreckt.

7. Bremsscheibe nach Anspruch 5 oder 6, **dadurch gekennzeichnet, dass** der vertiefte Oberflächenabschnitt (6) die Form einer Furche aufweist und sich in einer gekrümmten oder geraden Richtung erstreckt.

8. Bremsscheibe nach einem der Ansprüche 5 bis 7, **dadurch gekennzeichnet, dass** der vertiefte Oberflächenabschnitt (6) eine variable Tiefe und/oder Breite aufweist, die insbesondere nach einer radialen Ausdehnungsrichtung der Scheibe (1) vom Halterungselement (3) zum Bremsstreifen (2) zunimmt.

9. Bremsscheibe nach einem der vorhergehenden Ansprüche, **dadurch gekennzeichnet, dass** der Verbindungsabschnitt (4) oder die Speiche (4) eine variable Dicke aufweist, die insbesondere nach einer radialen Ausdehnungsrichtung der Scheibe (1) vom Halterungselement (3) zum Bremsstreifen (2) zunimmt.

10. Bremsscheibe nach einem der Ansprüche 1 bis 9, **dadurch gekennzeichnet, dass** der Bremsstreifen (2) an mindestens einer Endseitenfläche (2a, 2b) eine Vielzahl an jeweiligen Abschnitten (9) aufweist, die gegenüber den Endseitenflächen (2a, 2b) vertieft sind.

11. Bremsscheibe nach Anspruch 10, **dadurch gekennzeichnet, dass** der Bremsstreifen (2) der Scheibe (1) mindestens eine Vielzahl an vertieften Abschnitten (9) aufweist, von denen ein jeder sich von der Umfassungsseitenfläche (2c) des Streifens (2) zugewandt zur Außenseite der Scheibe (1) nach oben zu einem oder mehreren blinden Enden (15) erstreckt, die im Bremsstreifen (2) eingeschlossen sind.

12. Bremsscheibe nach Anspruch 10 oder 11, **dadurch gekennzeichnet, dass** der Bremsstreifen (2) eine Vielzahl an vertieften Abschnitten (9) aufweist, die sich mindestens von der Umfassungsseitenfläche (2c) zugewandt zur Außenseite der Scheibe (1) nach oben zu mindestens einem jeweiligen blinden Ende (15) im Bremsstreifen (2) erstrecken, und eine Vielzahl an vertieften Abschnitten (9), die sich mindestens von einem jeweiligen innenseitigen Abschnitt des Streifens (2) zwischen den Umfassungsseitenflächen (2c, 2d) des Streifens (2) erstrecken.

13. Bremsscheibe nach Anspruch 12, **dadurch gekennzeichnet, dass** sich die vertieften Abschnitte (9), die sich mindestens von der Umfassungsseitenfläche (2c) zugewandt zur Außenseite der Scheibe (1) erstrecken, in der Zone des Streifens (2) zwischen den zwei Verbindungsabschnitten (4) befinden und die vertieften Abschnitte (9), die sich in einem jeweiligen innenseitigen Abschnitt des Streifens (2) zwischen den Umfassungsseitenflächen (2c, 2d) des Streifens (2) erstrecken, in der Nähe eines jeden Verbindungsabschnitts (4) angeordnet sind.

14. Bremsscheibe nach Anspruch 10 oder 11, **dadurch gekennzeichnet, dass** der Bremsstreifen (2) eine Vielzahl an vertieften Abschnitten (9) aufweist, die sich mindestens von der Umfassungsseitenfläche (2d) zugewandt zur Innenseite der Scheibe (1) nach oben bis zu mindestens einem blinden Ende (15) im Bremsstreifen (2) erstrecken, und eine Vielzahl an vertieften Abschnitten (9), die sich mindestens von einem jeweiligen innenseitigen Abschnitt des Streifens (2) zwischen den Umfassungsseitenflächen (2c, 2d) des Streifens (2) erstrecken, wobei die vertieften Abschnitte (9), die sich mindestens von der Umfassungsseitenfläche (2c) zugewandt zur Außenseite der Scheibe (1) erstrecken, in der Nähe eines jeden Verbindungsabschnitts (4) angeordnet sind und die vertieften Abschnitte (9), die sich in einem jeweiligen innenseitigen Abschnitt des Streifens (2) zwischen den Umfassungsseitenflächen (2c, 2d) des Streifens (2) erstrecken, in der Zone des Streifens (2) zwischen zwei Verbindungsabschnitten (4) angeordnet sind.

15. Bremsscheibe nach einem der Ansprüche 10 bis 14, **dadurch gekennzeichnet, dass** ein jeder vertiefte Abschnitt (9) von einer Endseitenfläche (2a) zur anderen Seitenfläche (2b) des Bremsstreifens führt.

16. Bremsscheibe nach einem der Ansprüche 10 bis 15, **dadurch gekennzeichnet, dass** der Bremsstreifen (2) der Scheibe (1) eine Vielzahl an Durchführungslöchern (10) von einer Endseitenfläche (2a) zur anderen Seitenfläche (2b) aufweist, die vorzugsweise kreisförmig sind, und/oder eine Vielzahl an Aussparungen (11), wobei eine jede Aussparung (11) vorzugsweise an einem jeweiligen Verbindungsabschnitt (4) positioniert ist.

17. Bremsscheibe nach einem der vorhergehenden Ansprüche, **dadurch gekennzeichnet, dass** ein jeder vertiefte Abschnitt (9) des Bremsstreifens ein jeweiliges Profil aufweist, definierend das Verfahren zum Biegen und Verformen des Bremsstreifens (2) in einem Betriebszustand. Insbesondere weist der vertiefte Abschnitt (9) die Form eines Lochs (10) oder einer Aussparung (11) oder einer Nut (12) auf, jeweils mit einem relativen Profil oder eine Kombination der Elemente (10, 11, 12) und jeweiligen Profile.

## Revendications

1. Disque de frein monolithique comprenant une bande de frein (2), un élément de support (3) de la bande de frein (2) et au moins une partie de raccordement (4) de l'élément de support (3) avec la bande de frein (2) ; la bande de frein (2), l'élément de support (3) et la partie de raccordement (4) étant une seule pièce mécanique, car provenant de l'usinage d'une seule pièce mécanique non finie ;
la bande de frein (2) comporte deux faces d'extrémité (2a, 2b) dont la distance entre celles-ci définit l'épaisseur axiale de la bande de frein (2) ; l'élément de support (3) comporte deux faces d'extrémité (3a, 3b) dont la distance entre celles-ci définit l'épaisseur axiale de l'élément de support (3) ; la partie de raccordement (4) comporte des faces d'extrémité (4a, 4b) respectives dont la distance définit l'épaisseur axiale du rayon (4) ; la partie de raccordement (4) comporte une ou plusieurs parties renfoncées (5, 6), en particulier intérieures et/ou superficielles, réalisées au moins dans une extension radiale et axiale de la direction du disque (1) ; chaque partie renfoncée (5, 6) ayant une profondeur axiale respective définie le long de la direction d'extension axiale du disque (1) ; l'épaisseur axiale moyenne de la partie de raccordement (4) étant définie comme une valeur égale à la distance entre les faces d'extrémité (4a, 4b) de la partie de raccordement (4), ou épaisseur axiale, de laquelle est soustraite la profondeur axiale d'au moins une partie renfoncée (5, 6), en particulier interne ou superficielle ; **caractérisé en ce que**
une pluralité de trous ou de fentes (8), de préférence des trous ou des fentes traversantes, définissent les parties de raccordement (4), ou rayons (4), de l'élément de support (3) avec la bande de frein (2).

2. Disque de frein selon la revendication 1, **caractérisé en ce que** la partie de raccordement (4) comporte une ou plusieurs parties renfoncées (5, 6), en particulier internes et/ou superficielles, réalisées au moins selon une direction d'extension circonférentielle du disque (1).

3. Disque de frein selon la revendication 1, **caractérisé en ce que** chaque rayon (4) comporte une fente ou un trou (7), de préférence une fente ou un trou traversant, réalisé(e) dans une partie interne respective du rayon (4).

4. Disque de frein selon l'une quelconque des revendications précédentes, **caractérisé en ce que** chaque partie renfoncée (5, 6) se prolonge à partir d'une des faces périphériques (4c, 4d) d'un rayon (4) respectif ou se prolonge d'une face périphérique (4c, 4d) à l'autre ; chaque rayon (4) comportant au moins une partie interne renfoncée (5) réalisée dans l'épaisseur axiale du rayon (4) comprise entre les faces d'extrémité (4a, 4b) du rayon (4), les faces d'extrémité (4a, 4b) étant exclues.

5. Disque de frein selon la revendication 1 ou 2, **caractérisé en ce qu'**il comporte au moins une partie superficielle renfoncée (6) le long d'une face d'extrémité (4a) de la partie de raccordement (4) et au moins une partie superficielle renfoncée (6) le long de l'autre face d'extrémité (4b) de la partie de raccordement (4) ; en référence à la direction d'extension radiale du disque (1), les parties superficielles renfoncées (6) sont disposées à une distance respective les unes des autres.

6. Disque de frein selon la revendication 5, **caractérisé en ce que** chaque partie superficielle renfoncée (6) se prolonge d'une face périphérique (4c, 4d) à l'autre de chaque rayon (4).

7. Disque de frein selon la revendication 5 ou 6, **caractérisé en ce que** la partie superficielle renfoncée (6) se présente sous la forme d'une rigole se prolongeant dans une direction incurvée ou rectiligne.

8. Disque de frein selon l'une quelconque des revendications 5 à 7, **caractérisé en ce que** la partie superficielle renfoncée (6) a une profondeur et/ou une largeur variable, en particulier croissante, selon une direction d'extension radiale du disque (1) de l'élément de support (3) vers la bande de frein (2).

9. Disque de frein selon l'une quelconque des revendications précédentes, **caractérisé en ce que** la partie de raccordement (4) ou rayon (4) a une épaisseur variable, en particulier décroissante selon une direction radiale d'extension du disque (1) de l'élément de support (3) vers la bande de frein (2).

10. Disque de frein selon l'une quelconque des revendications 1 à 9, **caractérisé en ce que** la bande de frein (2) comporte au moins en correspondance d'une face d'extrémité (2a, 2b) une pluralité de portions (9) respectives renfoncées par rapport aux faces d'extrémité (2a, 2b).

11. Disque de frein selon la revendication 10, **caractérisé en ce que** la bande de frein (2) du disque (1) présente au moins une pluralité de parties renfoncées (9), chacune se prolongeant de la face périphérique (2c) de la bande (2) tournée vers l'extérieur du disque (1) jusqu'à une ou plusieurs extrémités aveugles (15) incluses dans la bande de frein (2) .

12. Disque de frein selon la revendication 10 ou 11, **caractérisé en ce que** la bande de frein (2) comporte une pluralité de parties renfoncées (9) se prolongeant au moins à partir de la face périphérique (2c) tournée vers l'extérieur du disque (1) jusqu'à au moins une extrémité aveugle (15) respective dans la bande de frein (2) et une pluralité de parties renfoncées (9) se prolongeant au moins d'une partie interne respective de la bande (2), entre les faces périphériques (2c, 2d) de la bande (2).

13. Disque de frein selon la revendication 12, **caractérisé en ce que** les parties renfoncées (9) se prolongeant au moins de la face périphérique (2c) tournée vers l'extérieur du disque (1) sont situées dans la zone de la bande (2) entre deux parties de raccordement (4), et les parties renfoncées (9) se prolongeant dans une partie intérieure respective de la bande (2), entre les faces périphériques (2c, 2d) de la bande (2), sont situées à proximité de chaque partie de raccordement (4).

14. Disque de frein selon la revendication 10 ou 11, **caractérisé en ce que** la bande de frein (2) comporte une pluralité de parties renfoncées (9) se prolongeant au moins de la face périphérique (2d) tournée vers l'intérieur du disque (1) jusqu'à au moins une extrémité aveugle (15) respective dans la bande de frein (2) et une pluralité de parties renfoncées (9) se prolongeant au moins d'une partie intérieure respective de la bande (2), entre les faces périphériques (2c, 2d) de la bande (2) ; les parties renfoncées (9) se prolongeant au moins à partir de la face périphérique (2c) tournée vers l'extérieur du disque (1) sont situées à proximité de chaque partie de raccordement (4), et les parties renfoncées (9) se prolongeant dans une partie intérieure respective de la bande (2), entre les faces périphériques (2c, 2d) de la bande (2), sont situées dans la zone de la bande (2) entre deux parties de raccordement (4).

15. Disque de frein selon l'une quelconque des revendications 10 à 14, **caractérisé en ce que** chaque partie renfoncée (9) passe d'une face d'extrémité (2a) à l'autre face (2b) de la bande de frein.

16. Disque de frein selon l'une quelconque des revendications 10 à 15, **caractérisé en ce que** la bande de frein (2) du disque (1) comporte une pluralité de trous traversants (10) d'une face d'extrémité (2a) à l'autre face (2b), de préférence de forme circulaire, et/ou une pluralité de fentes (11), chaque fente (11) étant de préférence positionnée en correspondance d'une partie de raccordement (4) respective.

17. Disque de frein selon l'une quelconque des revendications précédentes, **caractérisé en ce que** chaque partie renfoncée (9) de la bande de frein a un profil respectif définissant le procédé de flexion et de déformation de la bande de frein (2) dans une condition de fonctionnement ; plus spécifiquement, la partie renfoncée (9) se présente sous la forme d'un trou (10), ou d'une fente (11), ou d'une encoche (12) ayant chacun un profil relatif, ou une combinaison des éléments (10, 11, 12) et des profils respectifs.
